# FASCICULE DE BREVET EUROPEEN

(11) **EP 3 237 817 B1**
(45) Date de publication et mention de la délivrance du brevet: **29.01.2020**
(21) Numéro de dépôt: 15821084.9
(22) Date de dépôt: 23.12.2015
(51) Int. Cl.: F24S 30/40, F24S 23/70, F24S 30/425

(54) **DISPOSITIF DE RÉFLEXION POUR CENTRALE SOLAIRE THERMIQUE**
REFLEXIONSVORRICHTUNG FÜR EIN SOLARTHERMISCHES KRAFTWERK
REFLECTION DEVICE FOR A THERMAL SOLAR POWER PLANT

(30) Priorité: 23.12.2014 FR 1463203
(43) Date de publication de la demande: 01.11.2017
(73) Titulaire: Commissariat à l'Énergie Atomique et aux Énergies Alternatives, 75015 Paris (FR)
(72) Inventeur: BREGEARD, Etienne, 66680 Canohes (FR)
(74) Mandataire: Hautier, Nicolas
(86) Numéro de dépôt international: PCT/EP2015/081212
(87) Numéro de publication internationale: WO 2016/102696

(56) Documents cités:
- WO-A2-2008/157560
- DE-A1- 2 824 494
- DE-A1-102009 031 905
- JP-A- 2012 112 604
- US-A1- 2009 223 510
- US-A1- 2010 229 852

## Description

### DOMAINE TECHNIQUE DE L'INVENTION

La présente invention concerne le domaine des centrales solaires et plus particulièrement les centrales solaires à concentration de type Fresnel. Elle concerne également les réflecteurs équipant ces centrales.

### ÉTAT DE LA TECHNIQUE

Dans un monde où l'énergie est une préoccupation constante, de nombreuses techniques tentent d'extraire de l'énergie à partir de sources d'énergie naturelles, dite renouvelables telles que l'énergie solaire.

Une première manière de produire de l'énergie à partir du rayonnement solaire consiste à convertir ce rayonnement en électricité par le biais de l'effet photoélectrique se produisant au cœur de cellules photovoltaïques, dont malheureusement le rendement est encore faible de nos jours.

Une seconde manière d'extraire de l'énergie à partir du rayonnement solaire consiste à utiliser cette lumière comme source de chaleur. Cette chaleur peut être exploitée de manière à chauffer un fluide caloporteur tel que de l'eau par exemple. Ce liquide, une fois chauffer au-delà de son point d'ébullition peut, par exemple, entrainer une turbine configurée pour générer un courant électrique et ainsi produire de l'électricité. Il existe plusieurs types de centrales solaires se distinguant selon leur technique de concentration des rayons lumineux, leur technique de transport de la chaleur et leur technique de conversion thermodynamique. On trouve ainsi des centrales solaires à collecteurs cylindro-paraboliques à foyer linéaire, à tour à récepteur central, à paraboles à foyer mobile et enfin à concentrateurs linéaires de Fresnel. Toutes ces centrales solaires ont en commun d'utiliser des réflecteurs de type miroir pour concentrer la lumière du soleil en un point donné.

Dans le cas de centrales solaires thermiques de type Fresnel, les réflecteurs constituent des lignes parallèles, de préférence orientées dans le sens Nord-Sud. Ces réflecteurs ont pour fonction de concentrer le rayonnement solaire incident sur une cible déterminée appelée récepteur, et cela qu'elle que soit la position du soleil relativement à la cible. De ce fait, les réflecteurs doivent être mobiles et leur orientation varie au cours de la journée afin de poursuivre la course du soleil. Ainsi, chacune des lignes de réflecteurs est articulée sur un axe unique de rotation placé dans l'axe longitudinal des réflecteurs, et orienté selon l'axe longitudinal de la ligne de réflecteurs de façon à réaliser un mouvement de poursuite de la course du soleil.

Les réflecteurs sont composés d'une surface de type miroir afin de réfléchir les rayons solaires en direction du récepteur. Afin d'accroitre la puissance solaire réfléchi sur le récepteur, les réflecteurs des solutions les plus performantes présentent une surface courbée. Ainsi, de part cette courbure, les rayons lumineux réfléchis convergent en une zone unique, appelé foyer ou zone focale, se trouvant à une distance du centre de courbure du réflecteur, cette distance est appelée distance focale ou focale. Il convient alors de positionner le récepteur en ce point. Dans le cas présent de réflecteurs linéaires de Fresnel, c'est le long d'une ligne que sont concentrés les rayons lumineux de par la configuration linéaire des réflecteurs. Le document US 2003/0056703 décrit en détail une installation de ce type.

L'amélioration du rendement des centrales solaires est bien sûr un objectif important et a fait l'objet de nombreuses recherches pour que le récepteur absorbe un maximum de chaleur et transfert un maximum de chaleur au fluide caloporteur.

Ces améliorations portent ainsi sur le choix des matériaux du récepteur ou encore sur sa structure. Par exemple le document FR 2458032 décrit une structure de récepteur permettant d'améliorer le rendement optique par suppression des pertes dans le reconcentrateur et d'éliminer les pertes par pont thermique. Le rendement global de la centrale solaire en est ainsi augmenté.

Le document US 2003/0056703 décrit une autre solution dans laquelle le récepteur présente une structure spécifique pour améliorer le rendement. Le document US 2009/0223510 A1 décrit un dispositif de réflexion selon le préambule de la revendication 1.

Les documents DE 28 24 494 A1 et WO 2008/157560 A2 décrivent un dispositif de réflexion comprenant au moins un réflecteur avec une surface réfléchissante courbe comportant au moins une première partie et une deuxième partie articulées l'une par rapport à l'autre en rotation.

Toute solution conduisant à améliorer encore le rendement d'une centrale solaire de type Fresnel serait très bénéfique.

La présente invention a pour objectif de proposer une solution permettant d'accroitre le rendement d'une centrale solaire thermique de type Fresnel.

### RÉSUMÉ DE L'INVENTION

La présente invention concerne un dispositif de réflexion pour centrales solaires thermiques, comprenant au moins un réflecteur, l'au moins un réflecteur comprenant au moins une surface réfléchissante des rayons solaires, ladite au moins une surface réfléchissante étant courbe et présentant une zone focale, où ladite au moins une surface réfléchissante comporte au moins une première partie et une deuxième partie articulées de sorte à pouvoir suivre la course du soleil, et articulées l'une par rapport à l'autre en rotation, le dispositif de réflexion comprenant un support destiné à être fixe par rapport au sol et configuré pour supporter les première et deuxième parties et dans lequel la première partie et la deuxième partie sont chacune articulées en rotation par rapport au support autour d'un même axe de rotation. Les première et deuxième parties sont configurées de sorte que leur rotation relative entraîne une modification de la zone focale du réflecteur.

Suivant un mode de réalisation, les réflecteurs sont cylindro-paraboliques, et présentent de ce fait un foyer linéaire, appelé zone focale.

De par le mouvement de la terre relativement au soleil, l'angle d'incidence des rayons lumineux change en cours de journée et le suivi, par les réflecteurs, du soleil ne permet pas de conserver une distance focale constante. De ce fait, si l'on souhaite maintenir un rendement quelque peu constant en cours de journée, il convient de pouvoir ajuster la zone focale des réflecteurs, puisque le récepteur est un élément fixe de la centrale solaire thermique.

La présente invention permet d'ajuster la distance focale des réflecteurs de la centrale solaire de sorte à maintenir la distance focale et donc la zone focale des réflecteurs au niveau du récepteur.

Cela permet d'augmenter considérablement le rendement de la centrale solaire. Par ailleurs, cette solution s'avère robuste et fiable ce qui est primordial dans ce type d'installation pour réduire les couts de maintenance.

De plus, les centrales solaires sont généralement installées dans un environnement plutôt sec et soumis à des vents réguliers. De ce fait, les réflecteurs doivent être protégés contre les intempéries, tel que les vents de sable par exemple, afin de conserver la réflectivité de la surface réfléchissante.

Avantageusement la présente invention permet, par la rotation relative des première et deuxième parties, de rapprocher les portions de surface réfléchissante portées par chacune des première et deuxième parties jusqu'à refermer sur lui-même le réflecteur. La surface réfléchissante est alors protégée en cas de nécessité. Sa durée de vie peut ainsi être prolongée.

De même, il est important de pouvoir nettoyer efficacement et rapidement la surface des réflecteurs, ici encore la présente invention permet d'atteindre une ouverture maximum du réflecteur de sorte à pouvoir accéder et nettoyer aisément et efficacement la surface réfléchissante des réflecteurs.

Enfin, les réflecteurs sont des éléments fragiles, il convient donc de les transporter et de les stocker de manière précise. La présente invention assure cette fonction en permettant de refermer sur eux-mêmes le réflecteur en plaçant l'une contre l'autre les portions de la surface réfléchissante portées par les première et deuxième parties de sorte à ce que la surface réfléchissante ne soit pas accessible depuis l'extérieur du réflecteur. La surface réfléchissante est alors protégée.

Selon un aspect de l'invention, le dispositif de réflexion selon la présente invention comprend un récepteur destiné à recevoir au moins une partie du rayonnement réfléchi par la surface réfléchissante d'au moins un réflecteur, ledit système étant configuré pour ajuster la position de la zone focale de l'au moins un réflecteur, en ajustant la position angulaire relative entre les au moins une première et une deuxième parties dudit au moins un réflecteur, en fonction de la position du soleil et/ou de celle du récepteur.

La présente invention concerne également selon un autre aspect, une ligne de réflecteurs comprenant au moins une pluralité de dispositifs de réflexion selon la présente invention comprenant au moins un réflecteur, lesdits dispositifs de réflexion étant alignés selon au moins un axe d'alignement parallèle à l'axe longitudinal de l'au moins un réflecteur.

Cet axe d'alignement est plus ou moins parallèle à l'axe formé par les pôles géographiques nord et sud de sorte à optimiser l'exposition aux rayons lumineux et de permettre un suivi du soleil en cours de journée par simple rotation des dispositifs de réflexion.

Une ligne de réflecteurs selon la présente invention permet de focaliser les rayons solaires tout le long du récepteur afin d'apporter plus d'énergie solaire et ainsi d'accroitre le rendement de la centrale solaire thermique.

Selon un autre aspect, la présente invention concerne un système d'ajustement de la longueur focale de réflecteur pour centrale solaire comprenant au moins une ligne de réflecteurs selon la présente invention ou comprenant au moins un dispositif de réflexion selon la présente invention et au moins un récepteur destiné à recevoir au moins une partie du rayonnement réfléchi par l'au moins un dispositif de réflexion comprenant au moins un réflecteur, ledit système étant configuré pour ajuster la position de la zone focale de l'au moins un réflecteur, en ajustant la position angulaire relative entre les au moins une première et une deuxième parties dudit au moins un réflecteur, en fonction de la position du soleil et/ou de celle du récepteur.

Ce système permet alors un accroissement du rendement de la centrale solaire thermique.

Selon un autre aspect, l'invention porte sur un champ solaire comprenant au moins une ligne de réflecteurs selon l'invention et comprenant au moins un récepteur destiné à recevoir au moins une partie du rayonnement réfléchi par l'au moins une ligne de réflecteurs.

Selon un aspect, la présente invention concerne une centrale solaire comprenant au moins un dispositif de réflexion selon la présente invention et comprenant au moins un récepteur destiné à recevoir au moins une partie du rayonnement réfléchi par l'au moins un dispositif de réflexion, ledit système étant configuré pour ajuster la position de la zone focale de la surface réfléchissante de chaque réflecteur, en ajustant la position angulaire relative entre les au moins une première et une deuxième parties de chaque réflecteur, en fonction de la position du soleil et/ou de celle du récepteur.

Chaque réflecteur d'une ligne est configuré pour être mobile en rotation selon au moins un axe longitudinal et comprenant au moins deux parties mobiles en rotation relative l'une par rapport à l'autre pour ajuster la distance focale de l'au moins un réflecteur, et comprenant au moins un récepteur destiné à recevoir au moins une partie du rayonnement réfléchi par l'au moins une ligne de réflecteurs.

Selon un aspect, la présente invention concerne un dispositif de réflexion comprenant au moins un réflecteur et au moins une unité de pilotage configurée pour piloter la position angulaire relative des au moins une première et une deuxième parties de l'au moins un réflecteur en fonction d'au moins un des paramètres suivants : Localisation géographique de la centrale solaire, Position du soleil; Inclinaison des rayons solaires; Heure; Jour; Mois; Position du dispositif de réflexion par rapport à un récepteur de la centrale solaire; Conditions météorologiques; Paramètres environnementaux.

Ce pilotage de la configuration des réflecteurs permet d'automatiser le suivi de la course du soleil mais également d'assurer une plus grande durée de vie des réflecteurs en les positionnant selon des configurations de sécurité grâce à la possibilité de les refermer. La prise en compte de paramètres environnementaux permet d'améliorer la durée de vie de la surface réfléchissante des réflecteurs.

Enfin, selon un autre aspect, la présente invention concerne un procédé d'orientation d'un dispositif de réflexion selon l'une quelconque des revendications 1 à 12, le procédé comprenant au moins l'étape suivante : rotation relative, autour d'un même axe de rotation, des première et deuxième parties de la surface réfléchissante du réflecteur de sorte à faire coïncider ou à rapprocher la zone focale du réflecteur avec la position d'un récepteur de la centrale solaire thermique. Cet ajustement de la zone focale est un gain important concernant le rendement de la centrale solaire thermique.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- les FIGURE 1a et 1b représentent un exemple de l'état de l'art d'un réflecteur parabolique de type Fresnel.
- la FIGURE 2a représente un mode de réalisation d'un dispositif de réflexion qui n'est pas couvert par l'invention présente; les FIGURES 2b à 2d représentent deux modes de réalisation distincts de la présente invention et plusieurs positionnements possibles pour l'un des deux modes de réalisation.
- la FIGURE 3 représente l'état de l'art d'un réflecteur en position de suivi du soleil lorsque celui-ci est en incidence basse, tel que le matin ou le soir.
- la FIGURE 4 représente la présente invention, selon un mode de réalisation, dans une configuration de suivi du soleil en incidence basse et configurée pour refocaliser les rayons lumineux.
- les FIGURES 5a à 5g représentent plusieurs configurations possibles d'un dispositif de réflexion de la présente invention selon un mode de réalisation.
- les FIGURES 6a et 6b représentent l'installation de la présente invention au niveau du sol et son orientation cardinale.
- les FIGURES 7a, 7b et 7c représentent différents modes de motorisation des réflecteurs en fonction des modes de réalisations possibles de la présente invention.
- La FIGURE 8 représente un champ de réflecteurs selon la présente invention et selon l'axe longitudinal du récepteur.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entrer dans le détail de modes de réalisation préférés notamment en référence aux figures, on énonce ci-après différentes options que peut préférentiellement mais non limitativement présenter l'invention, ces options pouvant être mises en oeuvre, soit séparément, soit suivant toute combinaison entre elles :
- Selon l'invention, la surface réfléchissante est formée par au moins ladite première partie et ladite deuxième partie articulées l'une par rapport à l'autre. Cette articulation relative des parties formant la surface réfléchissante permet la fonction « refocalisation », c'est-à-dire la modification de la zone focale du réflecteur.
- Avantageusement, la surface réfléchissante est continue entre la première et la deuxième partie. Il n'y a donc pas d'espace intermédiaire entre la première et la deuxième partie autre qu'un jeu nécessaire au montage ou à l'articulation de la première et la deuxième partie.
- Selon un mode de réalisation, la surface réfléchissante est formée uniquement par ladite première partie et ladite deuxième partie.
- Selon un mode de réalisation, seule l'une parmi ladite première partie et ladite deuxième partie est articulée en rotation par rapport au support. Cela permet une simplification de la structure du réflecteur.
- Selon l'invention, la surface réfléchissante est courbe. Chaque partie présente un bord interne tourné au regard de l'intérieur du réflecteur et un bord externe tourné au regard de l'extérieur du réflecteur.
- Avantageusement, la mobilité relative des deux parties permet de rapprocher les deux bords externes en faisant tourner les première et deuxième parties mobiles. Cela permet par exemple de replier le réflecteur sur lui-même pour protéger sa surface réfléchissante ou pour en faciliter le transport ou le stockage.
- Selon l'invention, le dispositif de réflexion comprend un support destiné à être fixe par rapport au sol et configuré pour supporter une première et une deuxième partie et la première partie et la deuxième partie sont chacune articulées en rotation par rapport au support.

Cela permet d'assurer un maintien fixe du dispositif de réflexion.
- Selon l'invention, la première partie et la deuxième partie sont chacune articulées en rotation par rapport au support autour d'un même axe de rotation. Cela permet une fonction "refocalisation", c'est à dire un ajustement de la position de la zone focale du dispositif de réflexion.
- Avantageusement, l'au moins un réflecteur s'étend principalement selon un axe longitudinal et ledit axe de rotation est parallèle audit axe longitudinal.

Cela permet un suivi de la course du soleil simplifié.
- Avantageusement, l'au moins un réflecteur s'étend principalement selon un axe longitudinal et le premier et le deuxième axe de rotation sont parallèles à l'axe longitudinal du dispositif de réflexion.

Cela permet un suivi de la course du soleil simplifié.
- Avantageusement, les tangentes à chacune des portions de surface portées par les premières et deuxième parties, tangentes prises au niveau des axes de rotation respectifs des premières et deuxième parties, forment entre elles un angle α. Le dispositif de réflexion est configuré pour permettre une évolution de l'angle α est entre 0° et 300°, avantageusement entre 0° et 180° et de préférence entre 160° et 180°.
- Avantageusement, l'au moins un réflecteur est configuré pour admettre une configuration dite de nettoyage dans laquelle l'angle α est supérieur ou égal à 180° et de préférence supérieure à 270° et de préférence supérieure à 300°. Dans cette configuration l'angle α est maximal. L'accès aux première et deuxième parties est facilité pour rendre le nettoyage ou la maintenance plus simple. Par ailleurs, dans cette position un liquide de nettoyage ou de l'eau de pluie s'écoule facilement par gravité hors de la surface réfléchissante sans stagner et donc sans provoquer de dépôt de résidus sur cette dernière.
- Avantageusement, l'au moins un réflecteur est configuré pour admettre une configuration dite de nettoyage dans laquelle l'angle α est inférieur ou égal à 340°.

Dans cette configuration l'angle α est maximal et permet l'usage de dispositifs de nettoyage adaptés et spécifiques. L'accès aux première et deuxième parties est ainsi facilité pour rendre le nettoyage ou la maintenance plus simple.
- Avantageusement, l'au moins un réflecteur est configuré pour admettre une configuration dite de repliement dans laquelle l'angle α est inférieur à 40° et de préférence inférieure à 20° et de préférence inférieure à 10° et de préférence égale à 0°. Cela permet de replier la surface réfléchissante sur elle-même pour la protéger. De manière avantageuse, cette configuration protège la surface réfléchissante du réflecteur des conditions météorologiques pouvant endommager cette surface.
- Avantageusement, la configuration de repliement comprend au moins deux positions : une position tête en haut, correspondant à une position où la surface réfléchissante de l'au moins un réflecteur est majoritairement au-dessus du ou des axes autour desquels tournent les première et deuxième parties (donc au-dessus de l'axe longitudinal), et une position tête en bas, correspondant à une position où la surface réfléchissante de l'au moins un réflecteur est majoritairement au-dessous du ou des axes autour desquels tournent les première et deuxième parties (donc au-dessous au-dessus de l'axe longitudinal).

La position tête en haut peut servir dans le cas d'intempéries passagères et/ou dans le cas du remplacement ou de l'installation de réflecteurs.

La position tête en bas permet une protection accrue du réflecteur, principalement de sa surface réfléchissante en cas d'intempéries longues et importantes par exemple. De plus cette position assure un stockage simplifié et sécurisé du réflecteur.
- Avantageusement, la configuration de repliement admet au moins une autre position dans laquelle les première et deuxième parties sont orientées dans la direction d'un vent dominant. Typiquement, les première et deuxième parties sont orientées à l'horizontal.
- Selon un mode de réalisation les première et deuxième parties sont articulées de manière à ce qu'elles soient repliées l'une sur l'autre. Le réflecteur est alors dans une configuration dite de repliement. Dans cette configuration, les portions de surface réfléchissante portées par chacune des première et deuxième parties se font face ou sont tournées en regard. Les extrémités des première et deuxième parties, lorsqu'elles sont rabattues l'une sur l'autre sont en contact ou séparées d'une distance d1. Selon un mode de réalisation d1 est nul ou inférieure à 0.7 fois et de préférence 0.5 fois et de préférence 0.2 fois la distance séparant une extrémité de son axe de rotation. Selon un autre mode de réalisation d1 est nul ou inférieure à 1 mètre et de préférence 0.5 mètre et de préférence 0.2 mètre. Selon un mode de réalisation, la configuration de repliement comprend au moins deux positions : une position tête en haut, correspondant à une position où la surface réfléchissante de l'au moins un réflecteur est majoritairement au-dessus du ou des axes autour desquels tournent les première et deuxième parties, et une position tête en bas, correspondant à une position où la surface réfléchissante de l'au moins un réflecteur est majoritairement au-dessous du ou des axes autour desquels tournent les première et deuxième parties.
- Selon un mode de réalisation, les première et deuxième parties présentent chacune une face arrière opposée à la surface réfléchissante. Les première et deuxième parties sont articulées de manière à ce que leur face arrière se fassent face ou soient tournées en regard dans une configuration dite de nettoyage. En configuration dite de nettoyage, les extrémités des première et deuxième parties, sont en contact ou sont séparées d'une distance d2. Selon un mode de réalisation d2 est nul ou inférieure à 0.7 fois et de préférence 0.5 fois et de préférence 0.2 fois la distance séparant une extrémité de son axe de rotation. Selon un autre mode de réalisation d2 est nul ou inférieure à 1 mètre et de préférence 0.5 mètre.
- Avantageusement, au moins un actionneur, également désigné actionneur, est configuré pour entrainer en rotation relative les première et deuxième parties articulées l'une par rapport à l'autre.

Cela permet une fonction "refocalisation", c'est à dire un ajustement de la position de la zone focale du dispositif de réflexion. L'utilisation d'un unique moteur diminue les problèmes mécaniques possibles.
- Avantageusement, l'au moins un actionneur est configuré pour entrainer en rotation relative les première et deuxième parties par l'intermédiaire d'au moins un arbre moteur commun entrainant en rotation la première partie articulée et la deuxième partie articulée.

Cela engendre comme effet technique que l'on peut réaliser un décalage angulaire entre l'au moins une première et une deuxième partie articulée à partir d'un même arbre moteur. On peut ainsi contrôler avec précision la zone focale du réflecteur tout en limitant la complexité et le cout de l'installation.
- Avantageusement, le dispositif de réflexion comprend au moins un dispositif de transmission couplé d'une part à l'au moins un arbre moteur commun et couplé d'autre part à l'une parmi la première et la deuxième partie de manière à ce que la vitesse de rotation des première et deuxième parties soit différente.
- Avantageusement, le dispositif de réflexion comprend au moins un dispositif de transmission couplé d'une part à l'au moins un arbre moteur commun et couplé d'autre part à l'une parmi la première et la deuxième parties, le dispositif de transmission étant configuré de manière à ce que lorsque l'arbre moteur tourne, celle parmi la première et la deuxième parties couplée au dispositif de transmission tourne à une vitesse différente de l'autre parmi la première et la deuxième parties.

Cela engendre comme effet technique que pour une même durée de rotation de l'arbre moteur l'une des deux parties tourne d'un angle plus grand que l'autre. Ainsi l'on peut réaliser un décalage angulaire entre l'au moins une première et une deuxième partie articulée à partir d'un même arbre moteur. On peut ainsi par exemple contrôler avec précision la zone focale du réflecteur tout en limitant la complexité et le cout de l'installation. On peut également replier les deux parties l'une sur l'autre de manière à ce que la portion de surface réfléchissante portée par l'une des première et deuxième parties soit au regard de la portion de surface réfléchissante portée par l'autre des première et deuxième parties.
- Avantageusement, au moins deux actionneurs, chacun couplé à l'une des première et deuxième parties et configurés pour entraîner en rotation relative les première et deuxième parties.

Cela engendre comme effet technique que l'on peut réaliser un décalage angulaire entre l'au moins une première et une deuxième partie articulée. On peut ainsi contrôler avec précision la zone focale du réflecteur tout en limitant la complexité et le cout de l'installation. De plus les actionneurs utilisés peuvent être de plus faible puissance que dans le cas d'un unique actionneur.
- Avantageusement, l'au moins un rayon de courbure individuel de l'au moins une première partie articulée est identique à l'au moins un rayon de courbure individuel de l'au moins une deuxième partie.
- Avantageusement, l'au moins un rayon de courbure individuel de l'au moins une première partie articulée est différent de l'au moins un rayon de courbure individuel de l'au moins une deuxième partie.
- Avantageusement, l'au moins une surface réfléchissante comprenant l'au moins une première et une deuxième partie articulée présente au moins une forme parabolique et de préférence forme une unique parabole.
- Avantageusement, la forme parabolique comprend une ouverture comprise entre 0.5m et 2m, avantageusement entre 0.75m et 1.5m et de préférence égale à 1m.
- Avantageusement, le dispositif de réflexion comprend une unité de pilotage configurée pour piloter la position angulaire relative des au moins une première et une deuxième parties en fonction d'au moins un des paramètres suivants :
   - Localisation géographique de la centrale solaire;
   - Position du soleil;
   - Inclinaison des rayons solaires;
   - Heure;
   - Jour;
   - Mois;
   - Position du dispositif de réflexion par rapport à un récepteur de la centrale solaire;
   - Conditions météorologiques;
   - Paramètres environnementaux;
- Avantageusement, l'au moins un axe d'alignement est parallèle à l'axe géographique Nord/Sud.

Cela permet de suivre la course du soleil en cours de journée simplement en réalisant une rotation du dispositif de réflexion autour de cet axe d'alignement.
- Avantageusement, au moins un arbre moteur de transmission est configuré pour entrainer en rotation l'au moins un réflecteur, ladite au moins une rotation étant générée par au moins un actionneur.

Cela permet de suivre la course du soleil en cours de journée.
- Avantageusement, chaque réflecteur comprend au moins un dispositif de transmission, ledit au moins un dispositif de transmission étant configurée pour réaliser un décalage angulaire entre l'au moins une première et une deuxième partie de chaque réflecteur.

Cela permet d'ajuster la position de la zone focale de chaque réflecteur de manière individuel, c'est à dire que chaque réflecteur peut être piloté indépendamment des autres afin par exemple d'exécuter une maintenance sur un réflecteur sans perturber le fonctionnement des autres.
- Avantageusement, au moins un premier arbre moteur de transmission est configuré pour entrainer en rotation l'au moins une première partie de chaque réflecteur et dans laquelle au moins un deuxième arbre moteur de transmission est configuré pour entrainer en rotation l'au moins une deuxième partie de chaque réflecteur.

L'utilisation de deux arbres moteurs permet une très bonne synchronisation entre tous les réflecteurs de leur mouvement.
- Avantageusement, au moins un dispositif de transmission est configurée pour réaliser un décalage angulaire entre l'au moins un premier et un deuxième arbre moteur de transmission.

Cela permet de réduire le nombre de dispositif de transmission et donc de réduire les travaux de maintenance en simplifiant l'infrastructure de la ligne de réflecteurs.
- Avantageusement, l'au moins un premier arbre moteur de transmission est configuré pour coopérer avec au moins un premier actionneur et dans laquelle l'au moins un deuxième arbre moteur de transmission est configuré pour coopérer avec au moins un deuxième actionneur.

L'utilisation de deux actionneurs permet de réduire leur puissance et de pouvoir piloter une partie du réflecteur indépendamment de l'autre, simplifiant ici encore l'infrastructure de la ligne de réflecteurs.
- Avantageusement, le dispositif de réflexion comprend une pluralité de réflecteurs alignés pour former une ligne de réflecteurs, chaque réflecteur s'étendant principalement selon un axe longitudinal et la ligne de réflecteurs s'étendant selon ledit axe longitudinal.

Cet alignement des réflecteurs selon le même axe que la ligne de réflecteurs permet un pilotage simplifié des réflecteurs afin de suivre la course du soleil.
- Avantageusement, ledit axe longitudinal est parallèle à l'axe terrestre Nord/Sud géographique. Le suivi de la course du soleil est simplifié par cette orientation.
- Avantageusement, le dispositif de réflexion comprend au moins un arbre moteur de transmission, de préférence un unique arbre moteur de transmission, couplé à un actionneur, de préférence un unique un actionneur, l'arbre moteur étant configuré pour entrainer en rotation lesdites première et deuxième parties de la ligne de réflecteurs.

Cela permet une simplification de l'infrastructure de la ligne de réflecteurs et une diminution du temps d'entretien puisque les pièces mécaniques sont en nombre réduit.
- Avantageusement, le dispositif de réflexion comprend un unique arbre moteur pour la ligne de réflecteurs et comprend pour chaque réflecteur de la ligne de réflecteurs au moins un dispositif de transmission couplé d'une part à l'unique arbre moteur et couplé d'autre part à l'une parmi la première et la deuxième parties du réflecteur. Le dispositif de transmission est configuré de manière à ce que lorsque l'arbre moteur tourne, celle parmi la première et la deuxième partie couplée au dispositif de transmission tourne à une vitesse différente de l'autre parmi la première et la deuxième partie.

Cela permet de réaliser un écart angulaire entre chacune des première et deuxième parties, et ainsi d'ajuster la zone focale de chaque réflecteur de manière indépendante par rapport aux autres réflecteurs.

Cela permet également d'effectuer des opérations de nettoyage ou de maintenance sur un réflecteur en particulier de la ligne de réflecteur sans avoir à configurer de la même manière tous les réflecteurs. De ce fait le rendement de la centrale solaire est faiblement impacté.
- Avantageusement, le dispositif de réflexion comprend au moins un premier arbre moteur de transmission configuré pour entrainer en rotation l'au moins une première partie de chaque réflecteur de la ligne de réflecteurs et comprend au moins un deuxième arbre moteur de transmission, différent du premier arbre moteur, configuré pour entrainer en rotation l'au moins une deuxième partie de chaque réflecteur de la ligne de réflecteurs.

Cela permet d'agir sur chaque partie du réflecteur de manière indépendante, mais d'avoir une synchronicité entre chaque réflecteur.
- Avantageusement, le dispositif de réflexion comprend un actionneur configuré pour entrainer en rotation à la fois le premier arbre moteur et le deuxième arbre moteur. Le dispositif de réflexion comprend au moins un dispositif de transmission couplé à l'actionneur et à au moins l'un parmi les premier et deuxième arbres moteur, le dispositif de transmission étant configuré de manière à ce que les premier et deuxième arbres moteur puissent tourner à des vitesses différentes lorsque l'actionneur fonctionne de manière à faire varier l'angle séparant les première et deuxième parties de chaque réflecteur.

Ainsi un dispositif de transmission commun à une ligne de réflecteurs est configuré pour faire varier l'angle séparant les première et deuxième parties de chaque réflecteur.
- Avantageusement, le dispositif de réflexion comprend un premier actionneur configuré pour entrainer en rotation l'au moins un premier arbre moteur et comprenant un deuxième actionneur, différent du premier actionneur, configuré pour entrainer en rotation l'au moins un deuxième arbre moteur de transmission.
- Avantageusement, le dispositif de réflexion comprend au moins une unité de pilotage, configurée pour piloter l'au moins un actionneur de manière à commander la position angulaire relative des première et deuxième parties de chaque réflecteur.

Cela permet de modifier la configuration du réflecteur afin de l'adapter aux besoins de la centrale solaire.
- Avantageusement, le dispositif de réflexion comprend un récepteur destiné à recevoir au moins une partie du rayonnement réfléchi par la surface réfléchissante d'au moins un réflecteur, ledit système étant configuré pour ajuster la position de la zone focale de l'au moins un réflecteur, en ajustant la position angulaire relative entre les au moins une première et une deuxième parties dudit au moins un réflecteur, en fonction de la position du soleil et/ou de celle du récepteur.

Cela permet une amélioration du rendement de la centrale solaire.
- Avantageusement, la première et la deuxième partie du réflecteur se trouvent toutes les deux situées uniquement d'un côté ou de l'autre du récepteur par rapport à la verticale passant par le récepteur. Par exemple, la première partie et la deuxième partie peuvent être toutes les deux et intégralement situées à droite du récepteur ou bien inversement être toutes les deux et intégralement situées à sa gauche.
- Avantageusement, le réflecteur est configuré pour être disposé d'un côté ou de l'autre uniquement du récepteur par rapport à la verticale passant par le récepteur.
- Avantageusement, le réflecteur est configuré pour être entièrement disposé d'un côté ou de l'autre uniquement du récepteur par rapport à la verticale passant par le récepteur.
- Avantageusement, au moins une unité de pilotage est configurée pour piloter l'au moins un actionneur.

Cette unité de pilotage permet de gérer l'ensemble d'une ligne de réflecteurs afin de pouvoir suivre la course du soleil mais également intervenir en fonction de la maintenance et des conditions météorologiques.
- Le dispositif comprend un support destiné à être fixe par rapport au sol et configuré pour supporter les première et une deuxième parties, la première partie et la deuxième partie étant chacune articulées en rotation par rapport au support.

Cette rotation des premières et deuxièmes parties permet de suivre la course du soleil en cours de journée.
- Avantageusement, au moins un actionneur est configuré pour entrainer en rotation relative les première et deuxième parties articulées l'une par rapport à l'autre.

Cette rotation relative permet l'ajustement de la zone focale du réflecteur.
- Avantageusement, au moins deux actionneurs, couplés respectivement à l'une des première et deuxième parties et configurés pour entraîner en rotation relative les première et deuxième parties.

L'utilisation d'au moins deux actionneurs permet de piloter la première partie indépendamment de la deuxième et vice-et-versa.
- Avantageusement, les tangentes à chacune des portions de surface portées par les premières et deuxième parties, prises au niveau des axes de rotation respectifs des premières et deuxième parties, forment entre elles un angle α. Le dispositif de réflexion est configuré pour permettre une évolution de l'angle α entre 60° et 160°, avantageusement entre 45° et 180° et de préférence entre 10° et 300°.

La variation de cet angle permet de configurer les réflecteurs dans diverses positions avantageuses.
- Avantageusement, la configuration de repliement comprend au moins deux positions : une position tête en haut, correspondant à une position où la surface réfléchissante de l'au moins un réflecteur est majoritairement au-dessus du ou des axes autour desquels tournent les première et deuxième parties, et une position tête en bas, correspondant à une position où la surface réfléchissante de l'au moins un réflecteur est majoritairement au-dessous du ou des axes autour desquels tournent les première et deuxième parties.

Cette position de repliement permet de protéger la surface réfléchissante des réflecteurs.
- Avantageusement, l'au moins une première et une deuxième parties comprennent chacune au moins un rayon de courbure, appelé rayon de courbure individuel, lesdits rayons de courbure individuels sont compris entre 10m et 100m, avantageusement entre 15m et 50m et de préférence égale à 20m.
- Avantageusement, l'au moins une surface réfléchissante composée de l'au moins une première et une deuxième partie comprend au moins un rayon de courbure, appelé rayon de courbure global, compris entre 10m et 100m, avantageusement entre 15m et 50m, et de préférence égale à 20m.
- Avantageusement, ledit axe longitudinal est parallèle à l'axe géographique Nord/Sud.

Cela permet de suivre la course du soleil par rotation des réflecteurs autour de leur axe longitudinal.
- Avantageusement, le dispositif de réflexion comprend un unique arbre moteur pour la ligne de réflecteurs et comprend pour chaque réflecteur de la ligne de réflecteurs au moins un dispositif de transmission couplé d'une part à l'unique arbre moteur et couplé d'autre part à l'une parmi la première et la deuxième parties du réflecteur, le dispositif de transmission étant configuré de manière à ce que lorsque l'arbre moteur tourne, celle parmi la première et la deuxième parties couplée au dispositif de transmission tourne à une vitesse différente de l'autre parmi la première et la deuxième parties.

Il est précisé que dans le cadre de la présente invention, le terme «concentrateur de Fresnel», «réflecteur de Fresnel», «réflecteur» ou leurs équivalents ont pour définition un dispositif comprenant une surface apte à réfléchir les rayons solaires en les focalisant en un point appelé point focal du réflecteur. De plus ces réflecteurs présentent une extension plus importante selon un axe, appelé axe longitudinal du réflecteur, ou axe d'alignement. De même, ces réflecteurs présentent un axe dit axe vertical du réflecteur étant perpendiculaire à l'axe longitudinal et selon une direction verticale.

Il est précisé que dans le cadre de la présente invention, le terme «axe solaire du réflecteur» ou ses équivalents ont pour définition un axe passant par le centre du soleil et par l'axe longitudinal du réflecteur de manière orthogonale.

Il est précisé que dans le cadre de la présente invention, le terme «zone focale» ou ses équivalents ont pour définition une zone de convergence des rayons lumineux réfléchis par ledit réflecteur. Dans le cadre d'un réflecteur qui s'étend selon une direction longitudinale, typiquement un réflecteur cylindro-parabolique, cette zone focale s'étend principalement selon la direction longitudinale du réflecteur cylindro-parabolique.

Sur les figures illustrant des exemples non limitatifs, le réflecteur cylindro-parabolique s'étend principalement selon la direction horizontale et la zone focale s'étend alors principalement selon la direction horizontale.

Si l'on considère une coupe verticale du réflecteur, alors la zone focale est limitée un point correspondant au point focal de cette coupe.

Il est précisé que dans le cadre de la présente invention, le terme «axe central du réflecteur» ou ses équivalents ont pour définition un axe passant par l'axe longitudinal du réflecteur et étant perpendiculaire à sa surface réfléchissante.

Il est précisé que dans le cadre de la présente invention, le terme «rayon de courbure individuel» ou ses équivalents ont pour définition le rayon de courbure de chacune des au moins une première et deuxième parties mutuellement articulée. Il est précisé que dans le cadre de la présente invention, le terme «rayon de courbure global» ou ses équivalents ont pour définition le rayon de courbure de la surface réfléchissante du réflecteur, la dite surface réfléchissante comprenant l'au moins une première partie et une deuxième partie.

Il est précisé que dans le cadre de la présente invention, le terme «ouverture d'une parabole» ou ses équivalents ont pour définition la distance séparant les deux extrémités de la parabole.

Il est précisé que dans le cadre de la présente invention, le terme «champ solaire» ou ses équivalents ont pour définition un espace comprenant une pluralité de lignes de réflecteurs et un récepteur.

Il est précisé que dans le cadre de la présente invention, le terme «axe Nord/Sud» ou ses équivalents ont pour définition un axe passant sensiblement par le pôle géographique Nord terrestre et le pôle géographique Sud terrestre. De même, le terme «axe Est/Ouest» ou ses équivalents ont pour définition un axe perpendiculaire à un axe passant par le pôle géographique Nord terrestre et le pôle géographique Sud terrestre

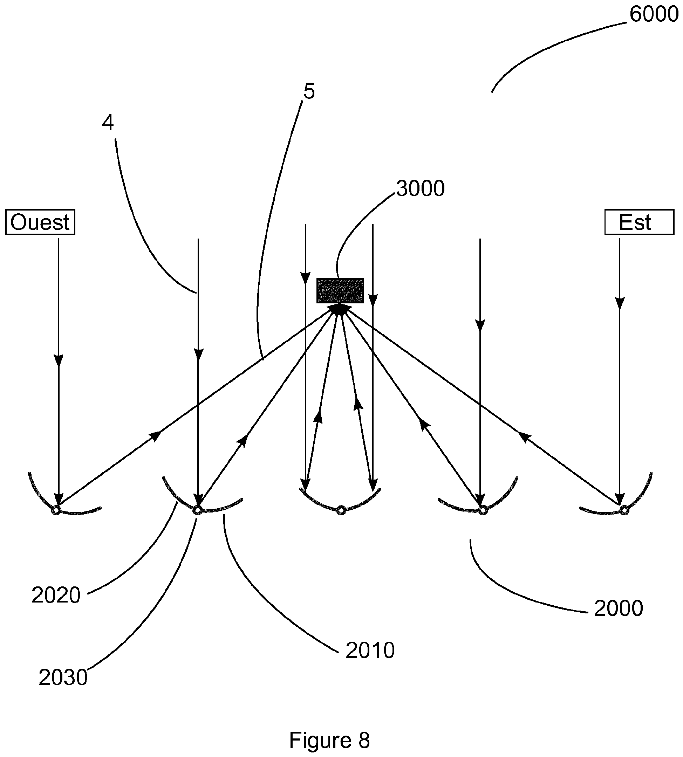

La présente invention concerne l'amélioration du rendement d'une centrale solaire thermique et plus particulièrement d'une centrale solaire thermique à réflecteurs de Fresnel. Une centrale solaire thermique comprend au moins un champ solaire. La figure 8 représente une vue selon l'axe géographique Nord/Sud d'un champ solaire 6000 selon la présente invention. Le champ solaire comprend au moins une ligne de réflecteurs 2000 et un unique récepteur 3000 apte à recevoir de l'énergie solaire et à convertir cette énergie par transfert thermique avec un liquide caloporteur par exemple. Pour ce faire il convient de concentrer les rayons solaires 4, 5 au maximum sur ce récepteur 3000. C'est-à-dire que les réflecteurs 2000 doivent focaliser les rayons solaires 4, 5 au niveau du récepteur 3000. Pour ce faire la zone focale 3 des réflecteurs 2000 doit correspondre à la position du récepteur 3000.

Le soleil décrivant une trajectoire bien précise dans le ciel, les réflecteurs 2000 doivent être réorientés tout au long de la journée pour suivre le soleil et ainsi toujours disposer du maximum d'ensoleillement de leur surface réfléchissante.

La course du soleil dans le ciel modifie l'angle d'incidence des rayons solaire 4 avec l'horizon ce qui modifie par la même occasion la zone focale 3 des réflecteurs 2000 lorsque ceux-ci suivent le soleil.

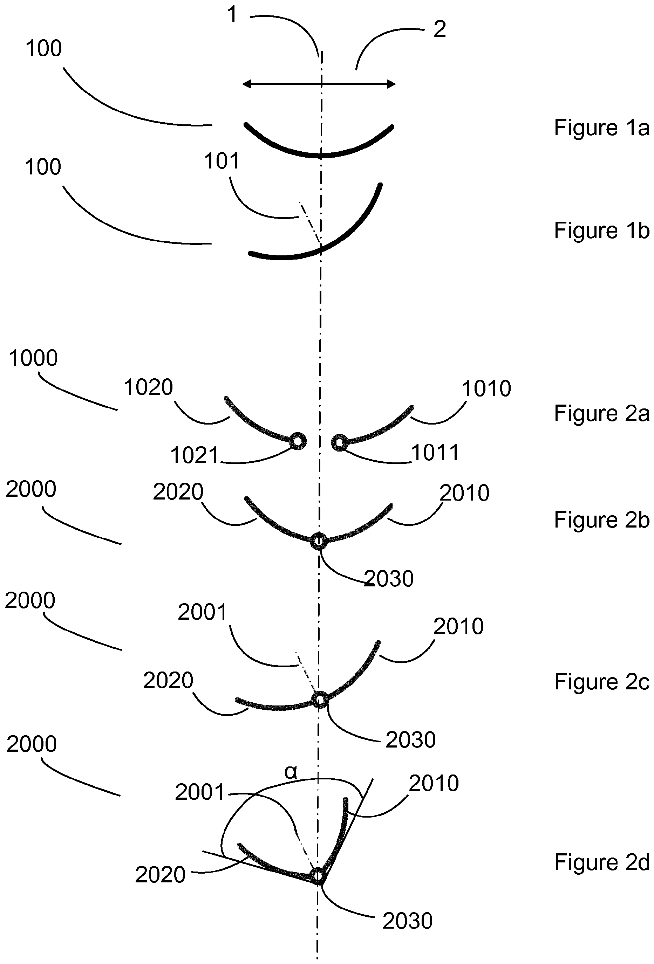

L'art antérieur illustré par les figures 1a et 1b représentant un réflecteur 100, ne permet qu'un suivi du soleil en cours de journée sans ajustement de la distance focale des réflecteurs, diminuant ainsi l'apport énergétique reçu par le récepteur, diminuant ainsi le rendement de la centrale solaire thermique.

Le suivi du soleil est possible par une rotation selon l'axe longitudinal des réflecteurs. Cet axe longitudinal est plus ou moins colinéaire à l'axe géographique Nord/Sud. Ainsi une rotation selon cet axe permet un suivi du soleil en cours de journée.

Ce réflecteur 100 comprend une surface réfléchissante courbée selon une forme parabolique, nommée parabole dans la suite du texte. Cette parabole comprend un axe central 101. Ce réflecteur 100 est mobile en rotation de sorte à produire un écart d'angle entre l'axe central 101 et l'axe vertical 1. Ce mouvement de rotation permet un suivi de la trajectoire du soleil au cours de la journée. Ce mouvement est illustré sur la figure 1b. Ce réflecteur 100 possède un rayon de courbure fixe, c'est-à-dire que l'ouverture de la parabole 2 est constante. De ce fait en cours de journée, lorsque les rayons solaires présentent un angle d'incidence faible, la distance focale du réflecteur 100 est involontairement modifiée et ne correspond plus à la distance entre le réflecteur 100 et le récepteur 3000.

Cette distance focale et donc la zone focale est une fonction de l'ouverture de la parabole 2. Cette ouverture étant fixe, la distance focale du réflecteur est donc uniquement une fonction de l'écart angulaire entre l'axe solaire du réflecteur 100 et son axe verticale 1.

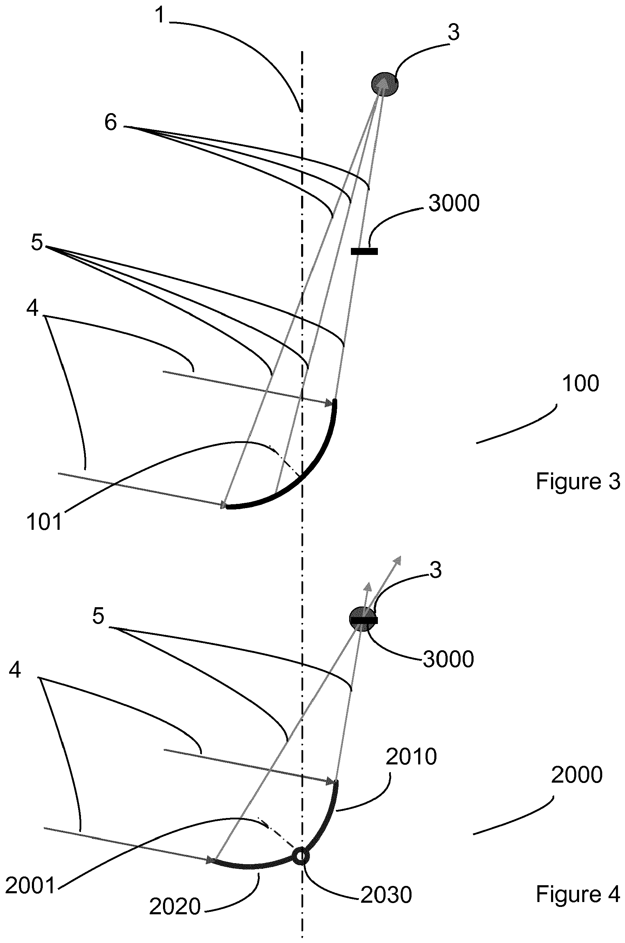

La figure 3 illustre précisément cette situation. Le réflecteur 100 de l'art antérieur est ajusté en rotation afin de suivre la course du soleil. Le soleil étant bas par rapport à l'horizon, c'est-à-dire que les rayons solaires présentent un angle d'incidence faible avec l'horizon, la zone focale du réflecteur 100 ne correspond plus à la position du récepteur 3000. De ce fait une grande quantité d'énergie solaire est perdue. La rotation du réflecteur 100 selon son axe longitudinal assure un ensoleillement maximum de sa surface réfléchissante, toutefois la défocalisation engendrée par cette rotation diminue le rendement de la centrale solaire thermique.

La présente invention propose, entre autre, un dispositif de réflexion comprenant un réflecteur dont la surface réfléchissante comprend au moins une première partie et une deuxième partie dont les positions angulaires relatives sont modifiables.

Chacune de ces parties est mobile en rotation l'une par rapport à l'autre et par rapport à l'axe longitudinal du réflecteur de sorte à pouvoir suivre la course du soleil. Chacune des première et deuxième parties est donc articulée en rotation par rapport à un support 2050 du réflecteur. Ainsi, la présente invention conserve les avantages de la poursuite du soleil en termes d'ensoleillement et résout le problème de la défocalisation en permettant un contrôle de la distance focale du réflecteur.

La figure 2a représente un réflecteur 1000 qui n'es pas couvert par l'invention présente, comprenant une surface réfléchissante, et comprenant au moins une première partie 1010 et au moins une deuxième partie 1020. Chacune de ces parties comprend un axe de rotation propre 1011, 1021. Chacune des aux moins deux parties 1010 et 1020 du réflecteur 1000 est mobile en rotation selon son propre axe de rotation 1011 et 1021, ces axes étant parallèles à l'axe longitudinal du réflecteur 1000 afin d'assurer le suivi du soleil. Ainsi, tout en suivant la course du soleil en cours de journée en appliquant une rotation propre à chacune des deux parties 1010 et 1020, il est possible d'ajuster la position de la zone focale 3 du réflecteur 1000 pour que celle-ci corresponde à la position du récepteur 3000.

Selon un mode de réalisation particulièrement avantageux illustré par la figure 2b, le réflecteur 2000 comprend une surface réfléchissante comprenant au moins une première partie 2010 et au moins une deuxième partie 2020. Ces deux parties sont articulées en rotation l'une par rapport à l'autre selon un même axe, qui est de préférence l'axe longitudinal 2030 au réflecteur 2000. Une rotation simultanée et/ou consécutive des première et deuxième parties 2010 et 2020 autour de cet axe longitudinal 2030 permet également au réflecteur 2000 de suivre la course du soleil.

La figure 2c représente, selon un mode de réalisation, le réflecteur 2000 ajusté en rotation selon son axe longitudinal 2030 et dont la distance focale est ajustée par rotation relative des deux parties 2010 et 2020 de la surface réfléchissante selon l'axe central 2001 du réflecteur 2000. L'ouverture de la parabole est donc adaptée pour que la distance focale coïncide avec le récepteur 3000.

La figure 2d représente la configuration du réflecteur 2000, selon un mode de réalisation, lorsque les rayons solaires ont un angle d'incidence faible. L'ouverture de la parabole est réduite afin d'ajuster la distance focale qui est alors réduite de manière à faire coïncider la zone focale 3 du réflecteur 2000 avec le récepteur 3000.

Selon la présente invention, les tangentes à chacune des portions de surface portées par les premières et deuxième parties 2010 et 2020, prises au niveau de leurs axes de rotation respectifs, forment entre elle un angle α.

La figure 4 illustre la présente invention selon un mode de réalisation. L'ajustement en rotation relative des parties 2010 et 2020 du réflecteur 2000 permet de positionner la zone focale 3 du réflecteur 2000 au même endroit que le récepteur 3000, de sorte à optimiser l'énergie thermique au niveau du récepteur 3000 en comparaison à la figure 3 représentant la même situation selon l'art antérieur.

Ce positionnement du réflecteur 2000, ainsi que l'ajustement de la position de la zone focale 3 du réflecteur 2000 sont assurés, selon un mode de réalisation de la présente invention, par une unité de pilotage 4000 du réflecteur 2000.

Avantageusement, cette unité de pilotage 4000 comprend des moyens de pilotage et de contrôle de la position angulaire de chacune des première et deuxième parties 2010 et 2020 autour de l'axe longitudinal 2030 du réflecteur 2000.

Le pilotage de la configuration du réflecteur 2000, c'est à dire la position angulaire de l'axe central du réflecteur 2001 et l'ouverture de la parabole, est pilotée par l'unité de pilotage 4000 en fonction d'au moins un paramètre parmi : la direction du vent, la force du vent, la position du soleil, la date, l'heure, l'année, des prévisions météorologiques, l'hydrométrie de l'environnement des réflecteurs 2000, la détection de grêle, des données doppler de localisation de nuages de pluie, de neige, de grêle, et plus généralement toutes données environnementales pouvant affecter le rendement de la centrale solaire.

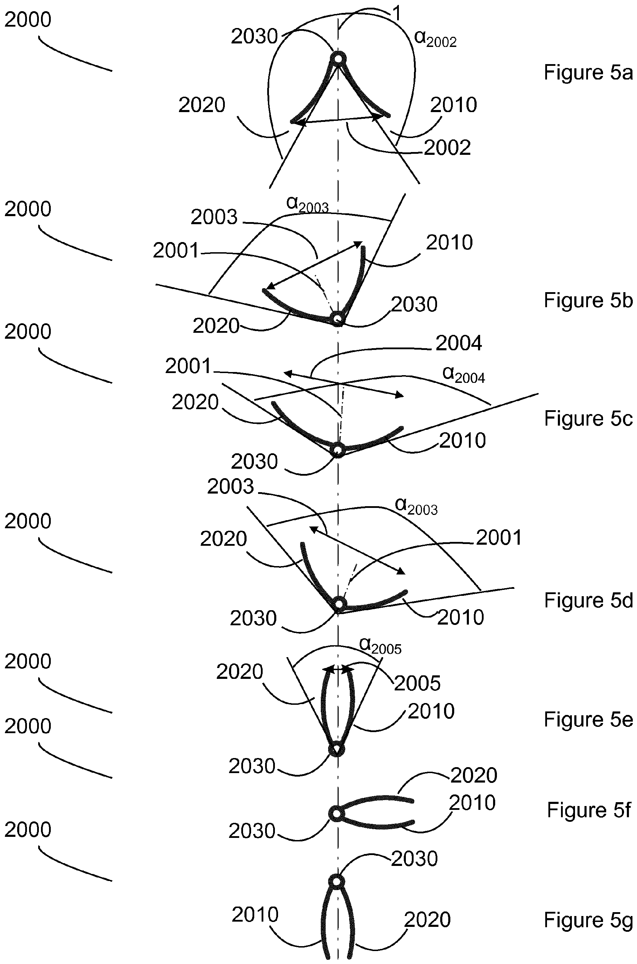

Les figures 5a à 5g illustrent, selon un mode de réalisation, les différentes configurations que peut prendre le réflecteur 2000 et plus particulièrement les parties articulées 2010 et 2020 du réflecteur 2000 au cours de la journée et/ou en fonction de ses opérations.

Ainsi, selon un mode de réalisation, la figure 5a présente la configuration du réflecteur 2000 lorsque celui-ci est en mode nettoyage et/ou maintenance. Les réflecteurs d'une centrale solaire thermique doivent rester propres pour que leur surface réfléchissante présente un coefficient de réflexion des rayons solaires le plus haut possible afin d'optimiser l'énergie solaire réfléchie par les réflecteurs. Les réflecteurs étant toute la journée exposés à l'environnement de la centrale solaire thermique, il convient de régulièrement procéder à un nettoyage de leur surface réfléchissante. Cette procédure est des plus délicates selon l'art antérieur puisque l'ouverture de la parabole étant fixe, cela ne facilite pas l'accès à la surface réfléchissante qui peut présenter des dimensions non négligeables. Il faut alors recourir à un outillage robotisé couteux et complexe lorsque les surfaces réfléchissantes sont courbes. De plus l'invention permet que, dans cette configuration, le liquide de nettoyage, ou tout autre fluide, ne reste pas retenu dans le creux du réflecteur 2000 mais s'en écoule par gravité. En effet, selon la configuration des réflecteurs de l'art antérieur, le centre de la parabole formée par le réflecteur est un lieu d'accumulation de résidus lors du nettoyage par exemple. L'évaporation du fluide laisse alors en place une couche de résidus secs qui détériore très fortement la réflectivité de la surface réfléchissante au centre de la parabole.

Selon la présente invention, l'ouverture de la parabole est modifiable, ainsi en mode nettoyage et selon un mode de réalisation, celle-ci est maximale afin de permettre l'accès à l'ensemble du réflecteur 2000. Cette configuration est en partie au moins caractérisée par une distance 2002 minimisée entre les deux extrémités de la parabole formée par le réflecteur 2000. Ces deux extrémités se trouvent verticalement sous l'axe de rotation 2030 respectif des première et deuxième parties 2010 et 2020.

Par exemple, dans cette configuration de nettoyage, la distance 2002 est inférieure la distance 2004, correspondant l'ouverture maximale de la parabole, avantageusement à 2 fois la distance 2004 et de préférence à 5 fois la distance 2004.

Selon ce mode de réalisation, l'au moins une première partie 2010 du réflecteur 2000 présente une rotation relative maximale selon l'axe longitudinal 2030 du réflecteur 2000 par rapport à l'au moins une partie 2020. Selon un autre mode de réalisation, l'au moins une deuxième partie articulée 2020 du réflecteur 2000 présente une rotation relative maximale selon l'axe longitudinal 2030 du réflecteur 2000 par rapport à l'au moins une partie 2010. Selon un troisième mode de réalisation, les au moins une première partie 2010 et une deuxième partie 2020 mutuellement articulées présentent une rotation l'une par rapport à l'autre maximale selon l'axe longitudinal 2030 du réflecteur 2000 de sorte à permettre un accès facilité à la surface réfléchissante du réflecteur 2000 pour toute opérations d'entretien de ladite surface réfléchissante. Ces opérations d'entretien peuvent consister en l'inspection de l'état de la surface réfléchissante du réflecteur, à son nettoyage et à son remplacement en cas de nécessité.

Typiquement, dans cette configuration de nettoyage, l'angle α, référencé α₂₀₀₂, est supérieur à 180° et de préférence supérieure à 270° et de préférence supérieure à 300°.

Selon un mode de réalisation préférentiel, l'angle α₂₀₀₂ correspond à l'angle maximum que prendre le réflecteur.

Selon un mode de réalisation, la figure 5b illustre le réflecteur 2000 dans une configuration de réflexion, le matin par exemple. Les rayons du soleil étant bas au niveau de l'horizon, le réflecteur 2000 subit d'abord une rotation selon son axe longitudinal 2030 afin de pouvoir collecter le maximum de rayons solaires. Ce faisant sa distance focale est elle aussi modifiée, il convient alors de diminuer l'ouverture de la parabole du réflecteur 2000 pour ainsi diminuer sa distance focale et faire coïncider la zone focale 3 du réflecteur 2000 avec le récepteur 3000. Pour cela, les au moins une première partie et une deuxième partie mutuellement articulées 2010 et 2020 sont ajustées en rotation relative de manière à réduire l'ouverture de la parabole 2003 du réflecteur 2000 et donc de réduire la distance focale dudit réflecteur 2000. Cette rotation selon l'axe longitudinal 2030 du réflecteur 2000 et l'ajustement de sa distance focale assurent une amélioration de l'énergie reçue par le récepteur 3000 et ainsi permettent une amélioration du rendement de la centrale solaire thermique.

Typiquement, dans cette configuration, l'angle α, référencé α₂₀₀₃, est compris entre 20° et 240°, avantageusement entre 60° et 180°

Suivant un mode de réalisation, l'ajustement de la zone focale est effectué par une correction de l'angle α comprise entre 0° et 10°, avantageusement entre 0.1° et 8° et de préférence entre 0.5° et 4°.

Selon un mode de réalisation, ces variations sont effectuées relativement à un angle α égal à 180°.

Selon un mode de réalisation, la figure 5c correspond à la configuration du réflecteur 2000 lorsque le soleil se trouve à un niveau élevé dans le ciel, comme en milieu de journée par exemple. L'ouverture de la parabole 2003 est donc importante pour permettre une augmentation de la distance focale dans le but de faire coïncider la zone focale 3 du réflecteur 2000 avec le récepteur 3000. L'orientation du réflecteur 2000 selon son axe longitudinal 2030 sensiblement aligné avec l'axe géographique Nord/Sud assure également la superposition de la zone focale 3 du réflecteur 2000 avec le récepteur 3000, ainsi qu'un ensoleillement maximal de la surface réfléchissante du réflecteur 2000.

Typiquement, dans cette configuration, l'angle α, référencé α₂₀₀₄, est compris entre 20° et 240°, avantageusement entre 60° et 180°. L'angle α₂₀₀₄ est avantageusement supérieur à l'angle α₂₀₀₃, et la distance 2004 est avantageusement supérieure à la distance 2003.

Les positions du réflecteur 2000 illustrées par les figures 5b et 5d correspondent à un exemple de position du réflecteur lorsque le soleil est bas dans le ciel, tel que le matin et l'après-midi.

Selon un mode de réalisation, la figure 5d illustre la configuration du réflecteur 2000 dans l'après-midi, par exemple, lorsque les rayons du soleil ont un angle d'incidence plus faible qu'au milieu de la journée. De manière similaire à la figure 5b, le rayon de courbure du réflecteur 2000 formé par l'au moins une première et une deuxième partie mutuellement articulées est ajusté pour que la zone focale du réflecteur 2000 coïncide avec le récepteur 3000.

Typiquement, dans cette configuration, l'angle α, référencé α₂₀₀₃, est compris entre 20° et 240°, avantageusement entre 60° et 180°

Les centrales solaires thermiques sont généralement situées dans des lieux de fort ensoleillement, conduisant l'environnement proche de la centrale solaire thermique à présenter une certaines aridité voir même sécheresse. L'étendue spatiale d'une centrale solaire thermique est assez importante puisqu'elle peut comprendre plusieurs dizaines de champs solaires. Un champ solaire comprenant au moins un récepteur 3000 sous la forme d'un conduit linéaire dont l'orientation est préférentiellement selon l'axe géographique Nord/Sud et une série de plusieurs lignes de réflecteurs disposés de sorte à apporter l'énergie solaire réfléchie au niveau du récepteurs.

Par ailleurs, un champ solaire est facilement soumis aux variations climatiques que cela soit en termes de température, de pression, de pluie mais aussi de vent. Un vent soufflant dans un lieu sans protection et sec entraine généralement des vents de sable. Le sable porté par le vent peut entrainer une dégradation importante de la surface réfléchissante des réflecteurs. Afin de prévenir ce genre de dégâts, mais également ceux causés lors de manipulation des réflecteurs, durant le stockage et/ou le transport, la présente invention propose, selon un mode de réalisation, une configuration rétractée dite de protection des réflecteurs.

Les figures 5e, 5f et 5g illustrent un mode de réalisation de la présente invention dans des configurations de protection de la surface réfléchissante du réflecteur 2000.

La figure 5e illustre plus particulièrement une configuration correspondant à l'ouverture de la parabole la plus faible 2005, c'est-à-dire à un positionnement de l'au moins une première partie articulée 2010 et de l'au moins une deuxième partie articulée 2020 au plus proche l'une de l'autre par l'application d'une rotation relative selon l'axe longitudinal 2030 du réflecteur 2000.

Dans cette configuration, les portions de surface réfléchissante portées respectivement par les première et deuxième parties sont rapprochées de manière à être positionnées en regard l'une de l'autre.

Avantageusement, l'extrémité de chacune des première et deuxième parties 2010 et 2020 comprend un joint afin que les extrémités des première et deuxième parties 2010 et 2020 puissent rentrer en contact l'une avec l'autre de sorte à fermer le réflecteur et ainsi protéger sa surface réfléchissante.

De préférence la distance 2005 est plus petite que la distance 2003, avantageusement deux fois plus petite et préférentiellement cinq fois plus petite.

Typiquement, dans cette configuration, l'angle α, référencé α₂₀₀₅ est inférieur à l'angle α₂₀₀₃, et la distance 2005 est inférieure à la distance 2003. Avantageusement, l'angle α₂₀₀₅ est inférieur à 40° et de préférence inférieure à 20° et de préférence inférieure à 10° et de préférence égale à 0°.

Selon un mode de réalisation illustré par les figure 5f et 5g, cette configuration du réflecteur 2000 fermé, appelée configuration de repliement, peut être réalisée selon tout angle autour de l'axe longitudinal 2030 du réflecteur 2000.

Cette configuration de repliement permet de protéger la surface réfléchissante du réflecteur 2000 en fonction des conditions environnementales. Par exemple en cas de vent violent circulant de l'Est vers l'Ouest, il peut être avantageux de positionner le réflecteur 2000 selon la configuration de la figure 5f afin de diminuer la prise au vent du réflecteur 2000.

De manière similaire, la figure 5g illustre une situation de chute de pluie et/ou de grêle, le réflecteur 2000 ainsi positionné est protéger des dégâts que pourrait provoquer ces intempéries. Dans cette configuration, les bords externes des première et deuxième parties 2010 et 2020 sont amenés dans leur position la plus basse suivant un même sens de rotation afin de préserver la surface réfléchissante du réflecteur 2000.

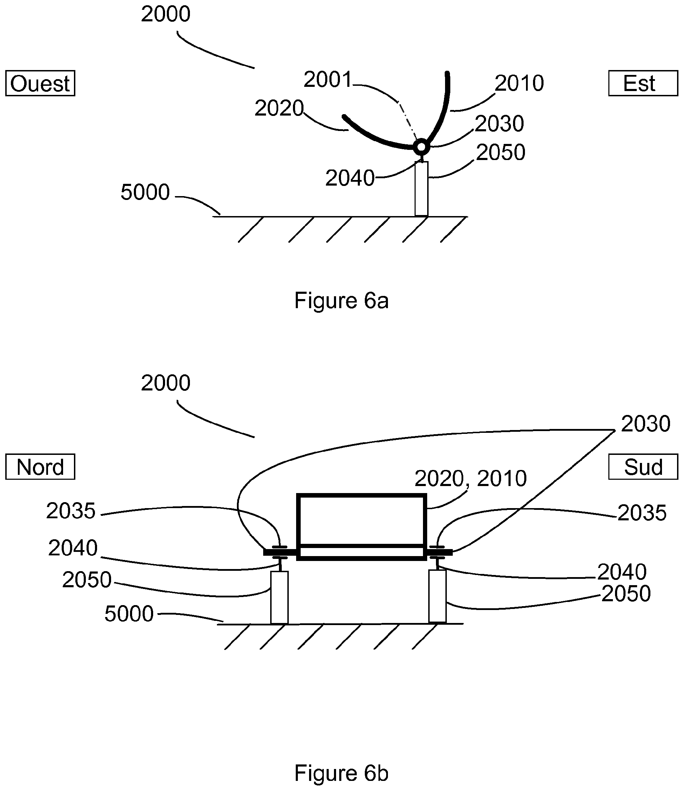

Les figures 6a et 6b illustrent l'implantation sur site d'un exemple de réflecteur 2000 selon l'invention. Cette implantation se fait sur une surface 5000 au préalablement aplanie de préférence. Le réflecteur 2000 est monté de préférence sur au moins un support 2050 par l'intermédiaire d'une fixation 2040. La fixation supporte la liaison pivot permettant la rotation d'au moins une partie 2010, 2020. Avantageusement, cet au moins un support 2050 peut être au moins un pilier. Ce au moins un pilier de support 2050 assure le maintien du réflecteur 2000 lorsque celui-ci se déplace en rotation selon son axe longitudinal 2030.

Avantageusement et selon un mode de réalisation, le réflecteur 2000 peut être maintenu par au moins deux supports 2050. Chaque support 2040 supporte une liaison pivot. Par exemple et comme illustré, ce support 2040 forme un palier 2035 pour le guidage en rotation de l'une au moins des première et deuxième parties.

Selon un mode de réalisation la figure 6a illustre un réflecteur 2000 selon son axe longitudinal 2030 tandis que la figure 6b illustre le même réflecteur 2000 selon un axe perpendiculaire à son axe longitudinal 2030.

Avantageusement l'axe longitudinal 2030 du réflecteur 2000 est colinéaire à l'axe géographique Nord/Sud.

Selon un mode de réalisation, durant la journée, le réflecteur 2000 effectue une rotation de chacune des première et deuxième parties mutuellement articulées 2010 et 2020 selon son axe longitudinal 2030 colinéaire à l'axe géographique Nord/Sud et dans la direction Est vers Ouest de manière à suivre la trajectoire du soleil dans le ciel.

Durant la journée, parallèlement à ce suivi du soleil, la rotation relative de l'au moins une première partie articulée 2010 et de l'au moins une deuxième partie articulée 2020 permet un ajustement de la distance focale du réflecteur 2000 et plus particulièrement une superposition de la zone focale 3 du réflecteur 2000 avec le récepteur 3000.

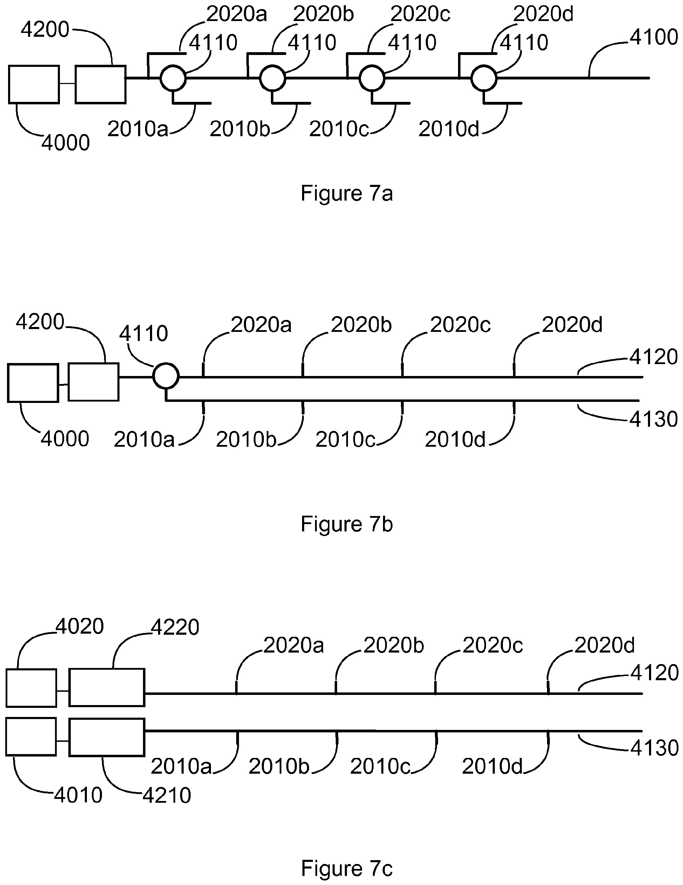

Les figures 7a à 7b illustrent plusieurs modes de réalisation de la motorisation d'une ligne de réflecteurs 2000 selon la présente invention.

Selon un mode de réalisation illustré par la figure 7a, un seul actionneur 4200 entraine en rotation un seul arbre moteur de transmission 4100. Cet actionneur 4200 est piloté par l'unité de pilotage 4000. Pour chaque réflecteur, un dispositif de transmission 4110, par exemple une boîte de transmission est associée à l'une des première et deuxième parties. L'unité de pilotage 4000 assure le contrôle de chaque dispositif de transmission 4110 de sorte à réaliser une rotation identique et/ou non identique de chacune des première et deuxième partie mutuellement articulées de chaque réflecteur 2000 composant la ligne de réflecteurs.

Avantageusement, l'arbre moteur de transmission 4100 comprend un nombre de dispositif de transmission 4110 au moins égal au nombre de réflecteurs 2000.

De préférence, chaque réflecteur 2000 comprend au moins un dispositif de transmission 4110.

De manière avantageuse, le dispositif de transmission 4110 assure un décalage angulaire entre l'au moins une première partie articulée (2010a, 2010b, 2010c, 2010d) du réflecteur et l'au moins une deuxième partie articulée (2020a, 2020b, 2020c, 2020d) du réflecteur.

Pour chaque réflecteur, l'arbre commun 4100 entraine l'une parmi la première et la deuxième partie ainsi que le dispositif de transmission 4110. Ce dernier entraine en rotation l'autre parmi la première et la deuxième partie.

A partir de la vitesse de rotation de l'arbre commun 4100, les première et deuxième parties peuvent tourner à des vitesses différentes. Pour une même durée de rotation, les première et deuxième parties peuvent alors tourner d'un angle différent, la partie tournant le plus vite ayant parcouru un secteur angulaire plus important. On obtient donc une rotation relative des première et deuxième parties.

Dans un cas extrême, on peut prévoir que le dispositif de transmission découple l'une des premières et deuxième parties de manière à ce que seule l'autre partie soit entrainée en rotation par l'arbre commun 4100.

Avantageusement, l'unité de pilotage décrite précédemment pilote le dispositif de transmission ainsi que la vitesse de rotation ou le nombre de rotation de l'arbre commun.

Selon un mode de réalisation, le dispositif de transmission 4110 peut être une boite de transmission. Ce dispositif de transmission 4110 permet un décalage angulaire réduit pour réaliser la fonction "refocalisation", c'est à dire l'ajustement de la position de la zone focale du réflecteur.

Selon un autre mode de réalisation, le dispositif de transmission 4110 permet de réaliser un décalage angulaire ample entre chacune des première et deuxième parties mutuellement articulées pour réaliser d'une part la fonction "refocalisation" et pour réaliser d'autre part les mouvements nécessaires à l'obtention des positions favorables au repli et aux opérations de maintenance.

L'utilisation d'un dispositif de transmission propre à chaque réflecteur permet une maintenance d'un réflecteur sans modification de la configuration des autres réflecteurs.

Selon un mode de réalisation, chaque réflecteur peut être configuré indépendamment des autres réflecteurs. Toute opération de maintenance sur un réflecteur n'entraine pas l'arrêt complet de la ligne de réflecteur.

Par ailleurs, ce mode de réalisation permet d'ajuster indépendamment la distance focale de chaque réflecteur d'une même ligne de réflecteurs.

Selon un mode de réalisation illustré par la figure 7b, un seul actionneur 4200 entraine en rotation au moins deux arbres moteur de transmission 4120 et 4130. Ici encore, une unité de pilotage 4000 assure le contrôle et le pilotage de la ligne de réflecteurs. L'actionneur 4200 entraine en rotation au moins deux arbres moteur de transmission 4120 et 4130 par l'intermédiaire d'au moins un dispositif de transmission 4110.

Ledit au moins un dispositif de transmission 4110 assure un décalage angulaire et/ou une vitesse de rotation différente et variable entre l'arbre moteur de transmission 4120 et l'arbre moteur de transmission 4130. Les deux arbres moteurs de transmission 4120 et 4130 sont interdépendants.

Selon un mode de réalisation, l'arbre moteur de transmission 4130 entraine en rotation l'au moins une première partie articulée (2010a, 2010b, 2010c, 2010d) du réflecteur, et l'arbre moteur de transmission 4120 entraine en rotation l'au moins une deuxième partie articulée (2020a, 2020b, 2020c, 2020d) du réflecteur.

Ce mode de réalisation permet une très grande synchronicité des mouvements des réflecteurs. De plus, l'utilisation d'un seul dispositif de transmission 4110 assure une diminution du nombre de panne possible, et une simplification de l'infrastructure de la ligne de réflecteurs, le nombre de dispositifs de transmission 4110 étant réduit.

Selon un mode de réalisation illustré par la figure 7c, au moins un actionneur 4210 entraine en rotation un arbre moteur de transmission 4120 et au moins un actionneur 4220, différent de l'actionneur 4210 entraine en rotation un arbre moteur de transmission 4130.

Selon un mode de réalisation chaque actionneur 4210 et 4220 est piloté par une unité de pilotage 4010, 4020 distincte.

Selon un autre mode de réalisation non illustré, une unique unité de pilotage gère les différents actionneurs 4210 et 4220 d'un même réflecteur ou d'une même ligne de réflecteurs.

Selon un mode de réalisation, l'arbre moteur de transmission 4130 entraine en rotation l'au moins une première partie articulée (2010a, 2010b, 2010c, 2010d) de chaque réflecteur de la ligne de réflecteurs.

Selon un mode de réalisation, l'arbre moteur de transmission 4120 entraine en rotation pour chaque réflecteurs l'au moins une deuxième partie articulée (2020a, 2020b, 2020c, 2020d).

Ce mode de réalisation permet un pilotage indépendant de chacune des première et deuxième parties des réflecteurs. Cela permet également l'utilisation d'actionneurs 4220 et 4210 de plus faible puissance que les actionneurs des figures 7a et 7b. Enfin, l'absence de dispositif de transmission diminue le nombre possible de problèmes techniques.

Selon un mode de réalisation l'actionneur peut comprendre une motorisation électrique (motoréducteur sans balais, nommé brushless en anglais, ou non ou bien pas à pas), ou bien une motorisation de type vérin (électromécanique ou hydraulique).

Selon un mode de réalisation, le dispositif de réflexion comprend au moins une unité de pilotage, configurée pour piloter l'au moins un actionneur et le dispositif de transmission de manière à commander la position angulaire relative des première et deuxième parties de chaque réflecteur, permettant ainsi d'ajuster la zone focale de la surface réfléchissante ou de rabattre les première et deuxième parties entres elles pour replier le réflecteur.

Selon un mode de réalisation le dispositif de transmission peut comprendre une boite de transmission, un système mécanique de type boite de vitesse, boite à cames, et/ou un système électromécanique à train épicycloïdal avec prise de puissance sur l'arbre de transmission principal et mouvement de calage par micromoteurs sur différentiel.

Selon un mode de réalisation des capteurs environnementaux comme par exemple d'ensoleillement sont utilisés afin de piloter convenablement les réflecteurs en fonction de la position du soleil dans le ciel.

Selon un mode de réalisation, ledit système est un système d'ajustement de la longueur focale d'une ligne de réflecteur selon la présente invention comprenant au moins un réflecteur selon la présente invention et au moins un récepteur, ledit système étant configuré pour ajuster la position de la zone focale de l'au moins un réflecteur selon la position du soleil et celle du récepteur. Ce suivi de la course du soleil assure un ensoleillement maximal des réflecteurs mais seul il n'est pas suffisant pour améliorer de manière significative le rendement de la centrale solaire. L'utilisation d'une fonction "refocalisation" permet d'adapter la zone focale des réflecteurs en fonction de la position du soleil et du récepteur de sorte à optimiser la concentration de l'énergie solaire au niveau du récepteur.

Selon un autre aspect, l'invention porte sur un champ solaire comprend au moins une ligne de réflecteurs selon l'invention et comprend au moins un récepteur destiné à recevoir au moins une partie du rayonnement réfléchi par l'au moins une ligne de réflecteurs.

Selon un mode de réalisation, la centrale solaire thermique est une centrale solaire thermique à concentrateurs linéaires, et de préférence une centrale solaire thermique de Fresnel.

Selon un mode de réalisation, la présente invention concerne également une centrale solaire thermique à réflecteurs de Fresnel dont le rendement est amélioré en partie de par la refocalisation des rayons solaires le long des récepteurs tout au long de la journée.

De plus, cette centrale solaire thermique présente, selon un mode de réalisation, une durée de vie accrue de par la protection possible des réflecteurs par la présente invention.

La présente invention concerne également un procédé d'orientation d'un dispositif de réflexion selon l'une quelconque des revendications 1 à 12. Ce procédé comprend au moins l'étape suivante : rotation relative, autour d'un même axe de rotation, de l'au moins une première partie et une deuxième partie articulées de la surface réfléchissante du réflecteur de sorte à suivre la course du soleil et à faire coïncider le foyer linéaire, également appelée la zone focale, du réflecteur avec la position d'un récepteur de la centrale solaire thermique.

Un exemple, non limitatif, de champ solaire selon la présente invention va maintenant être décrit.

Selon un mode de réalisation, un champ solaire comprend entre 8 et 20, avantageusement entre 10 et 18 et de préférence 16 lignes de réflecteurs.

Selon un mode de réalisation, l'espacement entre deux lignes de réflecteurs est compris entre 0.2m et 3m, avantageusement entre 0.4m et 1.5m et de préférence égal à 1.2m.

Selon un mode de réalisation, un champ solaire représente une étendue spatiale comprise entre 1000m² et 50000m², avantageusement entre 1500m² et 25000m² et de préférence égale à 5000m².

Selon un mode de réalisation, une ligne de réflecteurs présente une longueur en mètre linéaire comprise en 50 et 500, avantageusement entre 100 et 300 et de préférence égale à 200.

Selon un mode de réalisation, un réflecteur présente une longueur en mètre linéaire comprise en 0.5 et 40, et avantageusement entre 1 et 20.

Selon un mode de réalisation, l'ouverture de la parabole est comprise entre 0.5m et 2m, préférentiellement entre 0.75m et 1.5m et avantageusement 1m.

Selon un mode de réalisation, le rayon de courbure individuel de l'au moins une première partie articulée 2010 est compris entre 10m et 100m, avantageusement entre 15m et 50m et de préférence égal à 20m.

Selon un mode de réalisation, le rayon de courbure individuel de l'au moins une deuxième partie articulée 2020 est compris entre 10m et 100m, avantageusement entre 15m et 50m et de préférence égal à 20m.

Selon un mode de réalisation, l'au moins une première partie articulée 2010 comprend un rayon de courbure individuel égal au rayon de courbure individuel que comprend l'au moins une deuxième partie articulée 2020.

Selon un mode de réalisation, l'au moins une première partie articulée 2010 comprend un rayon de courbure individuel différent du rayon de courbure individuel que comprend l'au moins une deuxième partie articulée 2020.

Selon un mode de réalisation, le rayon de courbure global de la surface réfléchissante du réflecteur 2000 est compris entre 10m et 100m, avantageusement entre 15m et 50m et de préférence égal à 20m.

Selon un mode de réalisation, la hauteur d'un réflecteur est comprise entre 0.5m et 5m, avantageusement entre 0.75m et 3m et de préférence égal à 1.5m.

Selon un mode de réalisation l'écart angulaire entre l'axe longitudinal 2030 du réflecteur 2000 et l'axe géographique Nord/Sud est compris entre 0° et 20°, avantageusement entre 0° et 10° et de préférence égale à 0°.

L'invention n'est pas limitée aux modes de réalisations précédemment décrits et s'étend à tous les modes de réalisation couverts par les revendications.

## Revendications

1. Dispositif de réflexion pour centrale solaire thermique comprenant au moins un réflecteur (2000), l'au moins un réflecteur (2000) comprenant au moins une surface réfléchissante des rayons solaires, ladite au moins une surface réfléchissante étant courbe et présentant une zone focale dans lequel ladite au moins une surface réfléchissante comporte au moins une première partie (2010) et une deuxième partie (2020) articulées de sorte à pouvoir suivre la course du soleil et articulées l'une par rapport à l'autre en rotation, le dispositif de réflexion comprenant un support (2050) destiné à être fixe par rapport au sol et configuré pour supporter les première (2010) et deuxième parties (2020) et dans lequel la première (2010) partie et la deuxième partie (2020) sont chacune articulées en rotation par rapport au support (2050) autour d'un même axe de rotation (2030), **caractérisé en ce que** les première (2010) et deuxième parties (2020) sont configurées de sorte que leur rotation relative entraîne une modification de la zone focale du réflecteur (2000) de sorte à pouvoir maintenir la distance focale et donc la zone focale du réflecteur (2000) au niveau d'un récepteur de la centrale.

2. Dispositif de réflexion selon la revendication précédente dans lequel l'au moins un réflecteur (2000) s'étend principalement selon un axe longitudinal (2030) et dans lequel ledit axe de rotation est parallèle audit axe longitudinal (2030).

3. Dispositif de réflexion selon l'une quelconque des revendications précédentes dans lequel au moins un actionneur (4200, 4210, 4220) est configuré pour entrainer en rotation relative les première (2010) et deuxième parties (2020) articulées l'une par rapport à l'autre.

4. Dispositif de réflexion selon la revendication précédente dans lequel l'au moins un actionneur (4200) est configuré pour entrainer en rotation relative les première (2010) et deuxième (2020) parties par l'intermédiaire d'au moins un arbre moteur (4100) commun entrainant en rotation la première partie articulée (2010) et la deuxième partie articulée (2020) et de préférence, dans lequel le dispositif de réflexion comprend au moins un dispositif de transmission (4110) couplé d'une part à l'au moins un arbre moteur (4100) commun et couplé d'autre part à l'une parmi la première (2010, 2010a, 2010b, 2010c, 2010d) et la deuxième (2020, 2020a, 2020b, 2020c, 2020d) parties, le dispositif de transmission (4110) étant configuré de manière à ce que lorsque l'arbre moteur (4100) tourne, celle parmi la première (2010, 2010a, 2010b, 2010c, 2010d) et la deuxième (2020, 2020a, 2020b, 2020c, 2020d) parties couplée au dispositif de transmission (4110) tourne à une vitesse différente de l'autre parmi la première (2010, 2010a, 2010b, 2010c, 2010d) et la deuxième (2020, 2020a, 2020b, 2020c, 2020d) parties.

5. Dispositif de réflexion selon l'une quelconque des revendications 1 et 2 dans lequel au moins deux actionneurs (4210, 4220), couplés respectivement à l'une des première (2010, 2010a, 2010b, 2010c, 2010d) et deuxième (2020, 2020a, 2020b, 2020c, 2020d) parties et configurés pour entraîner en rotation relative les première (2010, 2010a, 2010b, 2010c, 2010d) et deuxième (2020, 2020a, 2020b, 2020c, 2020d) parties.

6. Dispositif de réflexion selon l'une quelconque des revendications précédentes dans lequel les tangentes à chacune des portions de surface portées par les premières et deuxième parties, prises au niveau des axes de rotation respectifs des premières et deuxième parties, forment entre elles un angle α, et dans lequel le dispositif de réflexion est configuré pour permettre une évolution de l'angle α entre 0° et 300°, avantageusement entre 0° et 180° et de préférence entre 160° et 180°, et de préférence dans lequel l'au moins un réflecteur (2000) est configuré pour admettre une configuration dite de nettoyage dans laquelle l'angle α est supérieur ou égal à 180° et de préférence supérieure à 270° et de préférence supérieure à 300°.

7. Dispositif de réflexion selon l'une quelconque des revendications précédentes comprenant une pluralité de réflecteurs alignés pour former une ligne de réflecteurs, chaque réflecteur (2000) s'étendant principalement selon un axe longitudinal (2030) et la ligne de réflecteurs s'étendant selon ledit axe longitudinal (2030), et dans lequel ledit axe longitudinal (2030) est parallèle à l'axe géographique Nord/Sud.

8. Dispositif de réflexion selon la revendication précédente comprenant au moins un arbre moteur (4100) de transmission, de préférence un unique arbre moteur (4100) de transmission, couplé à un actionneur (4200), de préférence un unique actionneur (4200), l'arbre moteur (4100) étant configuré pour entrainer en rotation lesdites première (2010, 2010a, 2010b, 2010c, 2010d) et deuxième parties (2020, 2020a, 2020b, 2020c, 2020d) de la ligne de réflecteurs.

9. Dispositif de réflexion selon la revendication précédente, le dispositif de réflexion comprenant un unique arbre moteur pour la ligne de réflecteurs et comprenant pour chaque réflecteur de la ligne de réflecteurs au moins un dispositif de transmission (4110, 4110...) couplé d'une part à l'unique arbre moteur (4110, 4110...) et couplé d'autre part à l'une parmi la première (2010, 2010a, 2010b, 2010c, 2010d) et la deuxième (2020, 2020a, 2020b, 2020c, 2020d) parties du réflecteur, le dispositif de transmission (4110, 4110...) étant configuré de manière à ce que lorsque l'arbre moteur (4110, 4110...) tourne, celle parmi la première (2010, 2010a, 2010b, 2010c, 2010d) et la deuxième (2020, 2020a, 2020b, 2020c, 2020d) parties couplée au dispositif de transmission (4110, 4110...) tourne à une vitesse différente de l'autre parmi la première (2010, 2010a, 2010b, 2010c, 2010d) et la deuxième (2020, 2020a, 2020b, 2020c, 2020d) parties.

10. Dispositif de réflexion selon l'une quelconque des revendications 7 ou 8 comprenant au moins un premier arbre moteur (4130) de transmission configuré pour entrainer en rotation l'au moins une première partie (2010, 2010a, 2010b, 2010c, 2010d) de chaque réflecteur de la ligne de réflecteurs et comprenant au moins un deuxième arbre moteur (4120) de transmission, différent du premier arbre moteur (4130), configuré pour entrainer en rotation l'au moins une deuxième partie (2020, 2020a, 2020b, 2020c, 2020d) de chaque réflecteur de la ligne de réflecteurs.

11. Dispositif de réflexion selon la revendication précédente comprenant:
- un actionneur (4200) configuré pour entrainer en rotation à la fois le premier arbre moteur (4130) et le deuxième arbre moteur (4120), le dispositif de réflexion comprenant au moins un dispositif de transmission (4110) couplé à l'actionneur (4200) et à au moins l'un parmi les premier (4130) et deuxième (4120) arbres moteur, le dispositif de transmission (4110) étant configuré de manière à ce que les premier (4130) et deuxième (4120) arbres moteur puissent tourner à des vitesses différentes lorsque l'actionneur (4200) fonctionne de manière à faire varier l'angle séparant les première et deuxième parties de chaque réflecteur,
ou
- un premier actionneur (4210) configuré pour entrainer en rotation l'au moins un premier arbre moteur (4130) et un deuxième actionneur (4220), différent du premier actionneur (4210), configuré pour entrainer en rotation l'au moins un deuxième arbre moteur (4120) de transmission.

12. Dispositif de réflexion selon l'une quelconque des revendications 3, 4, 6, 8 et 11 comprenant au moins une unité de pilotage (4000, 4010, 4020), configurée pour piloter l'au moins un actionneur (4200, 4210, 4220) de manière à commander la position angulaire relative des première et deuxième parties de chaque réflecteur.

13. Centrale solaire comprenant au moins un dispositif de réflexion selon l'une quelconque des revendications précédentes et comprenant au moins un récepteur (3000) destiné à recevoir au moins une partie du rayonnement réfléchi par l'au moins un dispositif de réflexion, ledit système étant configuré pour ajuster la position de la zone focale de la surface réfléchissante de chaque réflecteur (2000), en ajustant la position angulaire relative entre les au moins une première (2010) et une deuxième (2020) parties de chaque réflecteur (2000), en fonction de la position du soleil et/ou de celle du récepteur (3000).

14. Centrale solaire selon la revendication précédente dans laquelle l'au moins un dispositif est configuré pour être disposé d'un côté ou de l'autre uniquement du récepteur (3000) par rapport à la verticale passant par le récepteur (3000).

15. Procédé d'orientation d'un dispositif de réflexion selon l'une quelconque des revendications 1 à 12, le procédé comprenant au moins l'étape suivante : rotation relative, autour d'un même axe de rotation (2030), des première (2010) et deuxième (2020) parties de la surface réfléchissante du réflecteur de sorte à faire coïncider ou à rapprocher la zone focale du réflecteur avec la position d'un récepteur (3000) de la centrale solaire thermique.

## Patentansprüche

1. Reflexionsvorrichtung für ein solarthermisches Kraftwerk, die mindestens einen Reflektor (2000) umfasst, wobei der mindestens eine Reflektor (2000) mindestens eine Fläche umfasst, die Sonnenstrahlen reflektiert, wobei die mindestens eine reflektierende Fläche gekrümmt ist und eine Fokuszone aufweist, wobei die mindestens eine reflektierende Fläche mindestens einen ersten Teil (2010) und einen zweiten Teil (2020) umfasst, die angelenkt sind, um dem Lauf der Sonne folgen zu können, und in Bezug zueinander drehend angelenkt sind, wobei die Reflexionsvorrichtung einen Träger (2050) umfasst, der dazu bestimmt ist, in Bezug auf den Boden fest zu sein, und dafür konfiguriert ist, den ersten (2010) und zweiten Teil (2020) zu tragen, und wobei der erste Teil (2010) und der zweite Teil (2020) jeder in Bezug auf den Träger (2050) um ein und dieselbe Drehachse (2030) drehend angelenkt sind, **dadurch gekennzeichnet, dass** der erste (2010) und zweite Teil (2020) so konfiguriert sind, dass ihre relative Drehung eine Veränderung der Fokuszone des Reflektors (2000) bewirkt, um die Fokusdistanz und damit die Fokuszone des Reflektors (2000) im Bereich eines Empfängers des Kraftwerks halten zu können.

2. Reflexionsvorrichtung nach dem vorstehenden Anspruch, wobei sich der mindestens eine Reflektor (2000) hauptsächlich entlang einer Längsachse (2030) erstreckt, und wobei die Drehachse zur Längsachse (2030) parallel ist.

3. Reflexionsvorrichtung nach einem der vorstehenden Ansprüche, wobei mindestens ein Aktor (4200, 4210, 4220) dafür konfiguriert ist, den angelenkten ersten (2010) und zweiten Teil (2020) in Bezug zueinander relativ drehend anzutreiben.

4. Reflexionsvorrichtung nach dem vorstehenden Anspruch, wobei der mindestens eine Aktor (4200) dafür konfiguriert ist, den ersten (2010) und zweiten Teil (2020) mittels mindestens einer gemeinsamen Motorwelle (4100), die den ersten angelenkten Teil (2010) und den zweiten angelenkten Teil (2020) drehend antreibt, relativ drehend anzutreiben, und wobei die Reflexionsvorrichtung vorzugsweise mindestens eine Übertragungsvorrichtung (4110) umfasst, die einerseits mit der mindestens einen gemeinsamen Motorwelle (4100) gekoppelt ist, und andererseits mit einem aus dem ersten (2010, 2010a, 2010b, 2010c, 2010d) und dem zweiten Teil (2020, 2020a, 2020b, 2020c, 2020d) gekoppelt ist, wobei die Übertragungsvorrichtung (4110) so konfiguriert ist, dass wenn die Motorwelle (4100) dreht, derjenige aus dem ersten (2010, 2010a, 2010b, 2010c, 2010d) und dem zweiten Teil (2020, 2020a, 2020b, 2020c, 2020d), der mit der Übertragungsvorrichtung (4110) gekoppelt ist, mit einer Geschwindigkeit dreht, die sich vom anderen aus dem ersten (2010, 2010a, 2010b, 2010c, 2010d) und dem zweiten Teil (2020, 2020a, 2020b, 2020c, 2020d) unterscheidet.

5. Reflexionsvorrichtung nach einem der Ansprüche 1 und 2, wobei mindestens zwei Aktoren (4210, 4220) jeweils mit einem aus dem ersten (2010, 2010a, 2010b, 2010c, 2010d) und zweiten Teil (2020, 2020a, 2020b, 2020c, 2020d) gekoppelt und dafür konfiguriert sind, den ersten (2010, 2010a, 2010b, 2010c, 2010d) und zweiten Teil (2020, 2020a, 2020b, 2020c, 2020d) relativ drehend anzutreiben.

6. Reflexionsvorrichtung nach einem der vorstehenden Ansprüche, wobei die Tangenten jedes der Flächenabschnitte, die der erste und zweite Teil tragen, im Bereich der jeweiligen Drehachsen des ersten und zweiten Teils betrachtet zwischen sich einen Winkel α bilden, und wobei die Reflexionsvorrichtung dafür konfiguriert ist, eine Entwicklung des Winkels α zwischen 0° und 300°, vorteilhafterweise zwischen 0° und 180°, und vorzugsweise zwischen 160° und 180° zu ermöglichen, und wobei der mindestens eine Reflektor (2000) vorzugsweise dafür konfiguriert ist, eine sogenannte Reinigungskonfiguration zuzulassen, in der der Winkel α größer oder gleich 180°, und vorzugsweise größer als 270°, und vorzugsweise größer als 300° ist.

7. Reflexionsvorrichtung nach einem der vorstehenden Ansprüche, die eine Vielzahl von Reflektoren umfasst, die ausgerichtet sind, um eine Linie von Reflektoren zu bilden, wobei sich jeder Reflektor (2000) hauptsächlich entlang einer Längsachse (2030) erstreckt und sich die Reflektorenlinie entlang der Längsachse (2030) erstreckt, und wobei die Längsachse (2030) zur geographischen Nord-Süd-Achse parallel ist.

8. Reflexionsvorrichtung nach dem vorstehenden Anspruch, die mindestens eine Übertragungs-/Motorwelle (4100), vorzugsweise eine einzige Übertragungs-/Motorwelle (4100) umfasst, die mit einem Aktor (4200), vorzugsweise einem einzigen Aktor (4200) gekoppelt ist, wobei die Motorwelle (4100) dafür konfiguriert ist, den ersten (2010, 2010a, 2010b, 2010c, 2010d) und zweiten Teil (2020, 2020a, 2020b, 2020c, 2020d) der Reflektorenlinie drehend anzutreiben.

9. Reflexionsvorrichtung nach dem vorstehenden Anspruch, wobei die Reflexionsvorrichtung eine einzige Motorwelle für die Reflektorenlinie umfasst, und für jeden Reflektor der Reflektorenlinie mindestens eine Übertragungsvorrichtung (4110, 4110...) umfasst, die einerseits mit der einzigen Motorwelle (4110, 4110...) gekoppelt ist, und andererseits mit einem aus dem ersten (2010, 2010a, 2010b, 2010c, 2010d) und dem zweiten Teil (2020, 2020a, 2020b, 2020c, 2020d) des Reflektors gekoppelt ist, wobei die Übertragungsvorrichtung (4110, 4110...) so konfiguriert ist, dass wenn die Motorwelle (4110, 4110...) dreht, derjenige aus dem ersten (2010, 2010a, 2010b, 2010c, 2010d) und dem zweiten Teil (2020, 2020a, 2020b, 2020c, 2020d), der mit der Übertragungsvorrichtung (4110, 4110...) gekoppelt ist, mit einer Geschwindigkeit dreht, die sich vom anderen aus dem ersten (2010, 2010a, 2010b, 2010c, 2010d) und dem zweiten Teil (2020, 2020a, 2020b, 2020c, 2020d) unterscheidet.

10. Reflexionsvorrichtung nach einem der Ansprüche 7 oder 8, die mindestens eine erste Übertragungs-/Motorwelle (4130) umfasst, die dafür konfiguriert ist, den mindestens einen ersten Teil (2010, 2010a, 2010b, 2010c, 2010d) jedes Reflektors der Reflektorenlinie drehend anzutreiben, und mindestens eine sich von der ersten Motorwelle (4130) unterscheidende zweite Übertragungs-/Motorwelle (4120) umfasst, die dafür konfiguriert ist, den mindestens einen zweiten Teil (2020, 2020a, 2020b, 2020c, 2020d) jedes Reflektors der Reflektorenlinie drehend anzutreiben.

11. Reflexionsvorrichtung nach dem vorstehenden Anspruch, umfassend:
- einen Aktor (4200), der dafür konfiguriert ist, die erste Motorwelle (4130) und die zweite Motorwelle (4120) gleichzeitig drehend anzutreiben, wobei die Reflexionsvorrichtung mindestens eine Übertragungsvorrichtung (4110) umfasst, die mit dem Aktor (4200) und mit mindestens einer aus der ersten (4130) und zweiten Motorwelle (4120) gekoppelt ist, wobei die Übertragungsvorrichtung (4110) so konfiguriert ist, dass die erste (4130) und zweite Motorwelle (4120) mit unterschiedlichen Geschwindigkeiten drehen können, wenn der Aktor (4200) läuft, um den Winkel, der den ersten und zweiten Teil jedes Reflektors trennt, zu variieren,
oder
- einen ersten Aktor (4210), der dafür konfiguriert ist, die mindestens eine erste Motorwelle (4130) drehend anzutreiben, und einen sich vom ersten Aktor (4210) unterscheidenden zweiten Aktor (4220), der dafür konfiguriert ist, die mindestens eine zweite Übertragungs-/Motorwelle (4210) drehend anzutreiben.

12. Reflexionsvorrichtung nach einem der Ansprüche 3, 4, 6, 8 und 11, die mindestens eine Ansteuereinheit (4000, 4010, 4020) umfasst, die dafür konfiguriert ist, den mindestens einen Aktor (4200, 4210, 4220) anzusteuern, um die relative Winkelposition des ersten und zweiten Teils jedes Reflektors zu steuern.

13. Solarkraftwerk, das mindestens eine Reflexionsvorrichtung nach einem der vorstehenden Ansprüche umfasst, und mindestens einen Empfänger (3000) umfasst, der dazu bestimmt ist, mindestens einen Teil der Strahlung, die von der mindestens einen Reflexionsvorrichtung reflektiert wird, zu empfangen, wobei das System dafür konfiguriert ist, die Position der Fokuszone der reflektierenden Fläche jedes Reflektors (2000) anzupassen, indem es die relative Winkelposition zwischen dem mindestens einen ersten (2010) und einen zweiten Teil (2020) jedes Reflektors (2000) in Abhängigkeit von der Position der Sonne und/oder derjenigen des Empfängers (3000) anpasst.

14. Solarkraftwerk nach dem vorstehenden Anspruch, wobei die mindestens eine Vorrichtung dafür konfiguriert ist, in Bezug auf die Vertikale, die durch den Empfänger (3000) verläuft, nur auf einer oder der anderen Seite des Empfängers (3000) angeordnet zu werden.

15. Verfahren zum Ausrichten einer Reflexionsvorrichtung nach einem der Ansprüche 1 bis 12, wobei das Verfahren mindestens den folgenden Schritt umfasst: relatives Drehen des ersten (2010) und zweiten Teils (2020) der reflektierenden Fläche des Reflektors um ein und dieselbe Drehachse (2030), um die Fokuszone des Reflektors mit der Position eines Empfängers (3000) des solarthermischen Kraftwerks zusammenfallen zu lassen oder derselben anzunähern.

## Claims

1. Reflection device for a thermal solar power plant comprising at least one reflector (2000), the at least one reflector (2000) comprising at least one surface for reflecting sun rays, said at least one reflective surface being curved and having a focal zone, wherein said at least one reflective surface comprises at least one first portion (2010) and one second portion (2020) articulated so as to be able to follow the course of the sun and articulated against one another in rotation, the reflection device comprising a support (2050) intended to be fixed with respect to the ground and configured to support the first (2010) and second portions (2020), and wherein the first portion (2010) and the second portion (2020) are each articulated in rotation with respect to the support (2050) about one same axis of rotation (2030), **characterised in that** the first (2010) and second portions (2020) are configured such that the relative rotation thereof leads to a modification of the focal zone of the reflector (2000) so as to be able to maintain the focal distance and therefore the focal zone of the reflector (2000) at the level of a receiver of the power plant.

2. Reflection device according to the preceding claim, wherein the at least one reflector (2000) extends mainly about a longitudinal axis (2030) and wherein said axis of rotation is parallel to said longitudinal axis (2030).

3. Reflection device according to any one of the preceding claims, wherein at least one actuator (4200, 4210, 4220) is configured to drive in relative rotation the first (2010) and second (2020) portions, articulated against one another.

4. Reflection device according to the preceding claim, wherein the at least one actuator (4200) is configured to drive in relative rotation the first (2010) and second (2020) portions by way of at least one common motor shaft (4100) driving in rotation the first articulated portion (2010) and the second articulated position (2020) and preferably, wherein the reflection device comprises at least one transmission device (4110) coupled on the one hand to the at least one common motor shaft (4100) and coupled on the other hand to one from among the first (2010, 2010a, 2010b, 2010c, 2010d) and the second (2020, 2020a, 2020b, 2020c, 2020d) portions, the transmission device (4110) being configured such that when the motor shaft (4100) rotates, that from among the first (2010, 2010a, 2010b, 2010c, 2010d) and the second (2020, 2020a, 2020b, 2020c, 2020d) portions coupled to the transmission device (4110) rotates at a speed different from the other from among the first (2010, 2010a, 2010b, 2010c, 2010d) and the second (2020, 2020a, 2020b, 2020c, 2020d) portions.

5. Reflection device according to any one of claims 1 and 2, wherein at least two actuators (4210, 4220), coupled respectively to one of the first (2010, 2010a, 2010b, 2010c, 2010d) and the second (2020, 2020a, 2020b, 2020c, 2020d) portions and configured to drive in relative rotation the first (2010, 2010a, 2010b, 2010c, 2010d) and the second (2020, 2020a, 2020b, 2020c, 2020d) portions.

6. Reflection device according to any one of the preceding claims, wherein the tangents at each of the surface portions carried by the first and second portions, taken at the level of the respective axes of rotation of the first and second portions, together form an angle α, and wherein the reflection device is configured to make it possible for an evolution of the angle α between 0° and 300°, advantageously between 0° and 180° and preferably between 160° and 180°, and preferably wherein the at least one reflector (2000) is configured to permit a so-called cleaning configuration, wherein the angle α is greater than or equal to 180° and preferably greater than 270° and preferably greater than 300°.

7. Reflection device according to any one of the preceding claims, comprising a plurality of reflectors aligned to form a line of reflectors, each reflector (2000) mainly extending about a longitudinal axis (2030) and the line of reflectors extending about said longitudinal axis (2030), and wherein said longitudinal axis (2030) is parallel to the North/South geographic axis.

8. Reflection device according to the preceding claim, comprising at least one transmission motor shaft (4100), preferably one single transmission motor shaft (4100), coupled to an actuator (4200), preferably one single actuator (4200), the motor shaft (4100) being configured to drive in rotation said first (2010, 2010a, 2010b, 2010c, 2010d) and the second (2020, 2020a, 2020b, 2020c, 2020d) portions of the line of reflectors.

9. Reflection device according to the preceding claim, the reflection device comprising one single motor shaft for the line of reflectors and comprising, for each reflector of the line of reflectors, at least one transmission device (4110, 4110...) coupled on the one hand to the single motor shaft (4110, 4110...) and coupled on the other hand to one from among the first (2010, 2010a, 2010b, 2010c, 2010d) and the second (2020, 2020a, 2020b, 2020c, 2020d) portions of the reflector, the transmission device (4110, 4110...) being configured such that when the motor shaft (4110, 4110...) rotates, that from among the first (2010, 2010a, 2010b, 2010c, 2010d) and the second (2020, 2020a, 2020b, 2020c, 2020d) portions coupled to the transmission device (4110, 4110...) rotates at a speed different from the other from among the first (2010, 2010a, 2010b, 2010c, 2010d) and the second (2020, 2020a, 2020b, 2020c, 2020d) portions.

10. Reflection device according to any one of claims 7 or 8, comprising at least one first transmission motor shaft (4130) configured to drive in rotation the at least one first portion (2010, 2010a, 2010b, 2010c, 2010d) of each reflector of the line of reflectors and comprising at least one second transmission motor shaft (4120), different from the first motor shaft (4130), configured to drive in rotation the at least one second portion (2020, 2020a, 2020b, 2020c, 2020d) of each reflector of the line of reflectors.

11. Reflection device according to the preceding claim, comprising:
- an actuator (4200) configured to drive in rotation, both the first motor shaft (4130) and the second motor shaft (4120), the reflection device comprising at least one transmission device (4110) coupled to the actuator (4200) and to at least one from among the first (4130) and second (4120) motor shafts, the transmission device (4110) being configured such that the first (4130) and second (4120) motor shafts can rotate at different speeds when the actuator (4200) functions so as to make the angle separating the first and second portions of each reflector vary,
or
- a first actuator (4210) configured to drive in rotation the at least one first motor shaft (4130) and a second actuator (4220), different from the first actuator (4210), configured to drive in rotation the at least one second transmission motor shaft (4120).

12. Reflection device according to any one of claims 3, 4, 6, 8 and 11, comprising at least one control unit (4000, 4010, 4020), configured to control the at least one actuator (4200, 4210, 4220) so as to control the relative angular position of the first and second portions of each reflector.

13. Solar power plant comprising at least one reflection device according to any one of the preceding claims, and comprising at least one receiver (3000) intended to receive at least some of the radiation reflected by the at least one reflection device, said system being configured to adjust the position of the focal zone of the reflective surface of each reflector (2000), by adjusting the relative angular position between the at least one first (2010) and one second (2020) portions of each reflector (2000), according to the position of the sun and/or of that of the receiver (3000).

14. Solar power plant according to the preceding claim, wherein the at least one device is configured to be arranged on one side or on the other side only of the receiver (3000) with respect to the vertical passing through the receiver (3000).

15. Method for orienting a reflection device according to any one of claims 1 to 12, the method comprising at least the following step: relative rotation, about one same axis of rotation (2030), first (2010) and second (2020) portions of the reflective surface of the reflector so as to make the focal zone of the reflector coincide with or approach the position of a receiver (3000) of the thermal solar power plant.
